# EUROPÄISCHE PATENTSCHRIFT

(11) **EP 1 360 190 B1**
(45) Veröffentlichungstag und Bekanntmachung des Hinweises auf die Patenterteilung: **07.09.2005**
(21) Anmeldenummer: 02703581.5
(22) Anmeldetag: 25.01.2002
(51) Int. Cl.: C07F 7/08, C07F 7/10, C07F 7/18, A01N 55/00

(54) **PHTHALSÄUREDIAMIDE, EIN VERFAHREN ZU IHRER HERSTELLUNG UND IHRE VERWENDUNG ALS SCHÄDLINGSBEKÄMPFUNGSMITTEL**
PHTHALIC ACID DIAMIDE, METHOD FOR THE PRODUCTION THEREOF AND THE USE OF THE SAME AS A PESTICIDE
DIAMIDE D'ACIDE PHTALIQUE, SON PROCEDE DE FABRICATION ET SON UTILISATION COMME PESTICIDE

(30) Priorität: 06.02.2001 DE 10105169; 29.03.2001 DE 10115406
(43) Veröffentlichungstag der Anmeldung: 12.11.2003
(73) Patentinhaber: Bayer CropScience AG, 40789 Monheim (DE)
(72) Erfinder: BRETSCHNEIDER, Thomas, 53797 Lohmar (DE); ERDELEN, Christoph, 42799 Leichlingen (DE)
(86) Internationale Anmeldenummer: PCT/EP2002/000809
(87) Internationale Veröffentlichungsnummer: WO 2002/062807

(56) Entgegenhaltungen:
- EP-A- 0 249 015
- EP-A- 0 360 417
- EP-A- 0 919 542
- EP-A- 1 006 107
- PATENT ABSTRACTS OF JAPAN vol. 016, no. 283 (C-0955), 24. Juni 1992 (1992-06-24) & JP 04 074187 A (TOSHIBA SILICONE CO LTD), 9. März 1992 (1992-03-09)

## Beschreibung

Die vorliegende Erfindung betrifft neue Phthalsäurediamide, ein Verfahren zu ihrer Herstellung und ihre Verwendung als Schädlingsbekämpfungsmittel.

Es ist bereits bekannt, dass zahlreiche Phthalsäurediamide insektizide Eigenschaften besitzen (vgl. EP 0 919 542 A und EP 1 006 107 A). Die bekannten Verbindungen sind jedoch im Hinblick auf ihre Pflanzenverträglichkeit und Wirkhöhe nicht immer befriedigend. Es wurde nun gefunden, dass Phthalsäurediamide, die ein Siliciumatom in der Seitenkette enthalten, bei guter Pflanzenverträglichkeit sehr gute insektizide und akarizide Eigenschaften besitzen.

Es wurden nun Phthalsäurediainide der Formel (I) 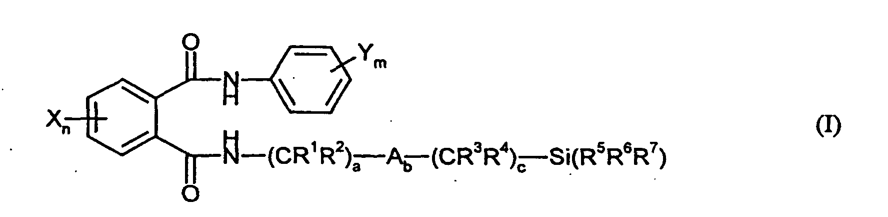 gefunden, in welcher
- X: für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halo-genalkyl oder für jeweils gegebenenfalls einfach bis vierfach, gleich oder verschieden durch Halogen, C₁-C₆-Alkyl, C₁-C₆-Halogenalkyl substituiertes Phenyl oder Phenoxy steht,
- X: außerdem für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl oder Phenoxy steht,
- Y: für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, steht,
- Y: außerdem für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, steht,
- n: für 1, 2 oder 3 steht,
- m: für 1, 2, 3 oder 4 steht,
- R¹, R², R³ und R⁴: unabhängig voneinander für Wasserstoff, C₁-C₆-Alkyl, C₁-C₆-Halogenalkyl oder C₃-C₆-Cycloalkyl stehen,
- R⁵, R⁶ und R⁷: unabhängig voneinander für C₁-C₆-Alkyl oder C₁-C₆-Alkoxy stehen,
- A: für -S(O)_{d}- oder Sauerstoff steht,
- a: für 1, 2, 3 oder 4 steht mit der Maßgabe, dass die Wiederholungseinheit -CR¹R²- gleiche oder verschiedene Bedeutungen haben kann, wenn a für 2, 3 oder 4 steht,
- b: für 0 oder 1 steht,
- c: für 0, 1, 2, 3 oder 4 steht mit der Maßgabe, dass die Wiederholungseinheit -CR³R⁴- gleiche oder verschiedene Bedeutungen haben kann, wenn c für 2, 3 oder 4 steht,
- d: für 0, 1 oder 2 steht.

Die Verbindungen der Formel (I) können gegebenenfalls in Abhängigkeit von der Art und Anzahl der Substituenten als geometrische und/oder optische Isomere, Regioisomere bzw. Konfigurationsisomere oder deren Isomerengemische in unterschiedlicher Zusammensetzung vorliegen. Sowohl die reinen Isomere als auch die Isomerengemische werden erfindungsgemäß beansprucht.

Weiterhin wurde gefunden, dass man die neuen Verbindungen der Formel (I) erhält, indem man

Imide der Formel (II) 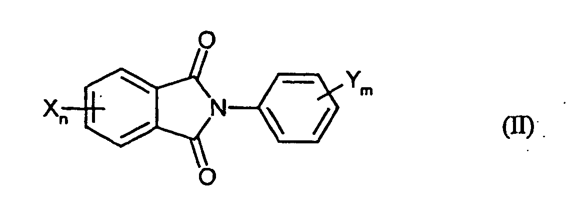 in welcher
X, Y, n und m die oben angegebenen Bedeutungen haben,
mit Silylaminen der Formel (III) 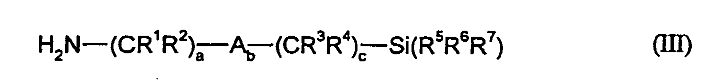 in welcher,
R¹, R², R³, R⁴, R⁵, R⁶, R⁷, A, a, b und c die oben angegebenen Bedeutungen haben,
gegebenenfalls in Gegenwart eines Verdünnungsmittels umsetzt.

Schließlich wurde gefunden, dass die erfindungsgemäßen Verbindungen der Formel (I) sehr gute insektizide Eigenschaften besitzen und sich sowohl im Pflanzenschutz als auch im Materialschutz zur Bekämpfung unerwünschter Schädlinge, wie Insekten und Akariden, verwenden lassen. Überraschenderweise zeigen die erfindungsgemäßen Phthalsäurediamide, die ein Siliciumatom in der Seitenkette enthalten, sehr gute insektizide und akarizide Wirkungen bei gleichzeitig guter Pflanzenverträglichkeit.

Die erfindungsgemäßen Phthalsäurediamide sind durch die Formel (I) allgemein definiert.
- X und Y: stehen unabhängig voneinander bevorzugt für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen.
- Y: steht außerdem bevorzugt für jeweils gegebenenfalls einfach bis vierfach, gleich oder verschieden durch Fluor, Chlor, Brom, Iod, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₁-C₄-Alkylthio, C₁-C₄-Halogenalkylthio mit 1 bis 9 Fluor-, Chlor- und/oder Bromatomen substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/oder 0 bis 2 nicht benachbarte Schwefelatome enthalten (insbesondere Furyl, Furyloxy, Thienyl, Thienyloxy, Pyirolyl, Pyrroiyloxy, Tetrazolyl, Pyridyl, Pyridyloxy, Pyrimidinyl, Pyrimidinyloxy, Pyridazinyl, Pyridazinyloxy, Pyrazinyl, Pyrazinyloxy).
- n: steht besonders bevorzugt für 1 oder 2.
- m: steht besonders bevorzugt für 1, 2 oder 3.
- R¹, R², R³ und R⁴: stehen unabhängig voneinander bevorzugt für Wasserstoff, C₁-C₄-Alkyl, C₁-C₄-Halogenalkyl mit 1 bis 9 Fluor-, Chlor- und/oder Bromatomen oder C₃-C₆-Cycloalkyl.
- R⁵, R⁶ und R⁷: stehen unabhängig voneinander bevorzugt für C₁-C₃-Alkyl oder C₁-C₃-Alkoxy.
- A: steht bevorzugt für -S(O)_{d}- oder Sauerstoff.
- a: steht bevorzugt für 1, 2 oder 3 mit der Maßgabe, dass die Wiederholungseinheit -CR¹R²- gleiche oder verschiedene Bedeutungen haben kann, wenn a für 2 oder 3 steht.
- b: steht bevorzugt für 0 oder 1.
- c: steht bevorzugt für 0, 1, 2 oder 3 mit der Maßgabe, dass die Wiederholungseinheit -CR³R⁴- gleiche oder verschiedene Bedeutungen haben kann, wenn c für 2 oder 3 steht.
- d: steht bevorzugt für 0, 1 oder 2.
- X: steht besonders bevorzugt für Chlor, Brom, Iod.
- Y: steht besonders bevorzugt für Methyl, Ethyl, n-Propyl, i-Propyl, Trifluormethyl, Pentafluorethyl, n-Heptafluorpropyl, i-Heptafluorpropyl, Trifluormethoxy oder -OCF₂CF₂H.
- Y: steht außerdem besonders bevorzugt für jeweils gegebenenfalls einfach bis dreifach, gleich oder verschieden durch Fluor, Chlor, Brom, Iod, Methyl, Ethyl, n-Propyl, i-Propyl, n-Butyl, i-Butyl, s-Butyl, t-Butyl, -CF₃, -CHF₂, -CClF₂, -CF₂CHFCl, -CF₂CH₂F, -CF₂CCl₃, -CH₂CF₃, -CF₂CHFCF₃, -CH₂CF₂H, -CH₂CF₂CF₃, -CF₂CF₂H, -CF₂CHFCF₃, -OCF₃, -OCHF₂, -OCF₂CF₂H, -SCF₃, -SCHF₂ substituiertes Phenoxy, Pyridinyloxy oder Tetrazolyl.
- n: steht besonders bevorzugt für 1.
- m: steht besonders bevorzugt für 2.
- R¹, R², R³ und R⁴: stehen unabhängig voneinander besonders bevorzugt für Wasserstoff, Methyl oder Ethyl.
- R⁵, R⁶ und R⁷: stehen unabhängig voneinander besonders bevorzugt für Methyl, Ethyl, Methoxy oder Ethoxy.
- A: steht besonders bevorzugt für -S(O)_{d}- oder Sauerstoff.
- a: steht besonders bevorzugt für 1, 2 oder 3 mit der Maßgabe, dass die Wiederholungseinheit -CR¹R²- gleiche oder verschiedene Bedeutungen haben kann, wenn a für 2 oder 3 steht.
- b: steht besonders bevorzugt für 0 oder 1.
- c: steht besonders bevorzugt für 0, 1 oder 2 mit der Maßgabe, dass die Wiederholungseinheit -CR³R⁴- gleiche oder verschiedene Bedeutungen haben kann, wenn c für 2 steht.
- d: steht besonders bevorzugt für 0, 1 oder 2.

Weiterhin ganz besonders bevorzugt sind Verbindungen der Formel (I-a) 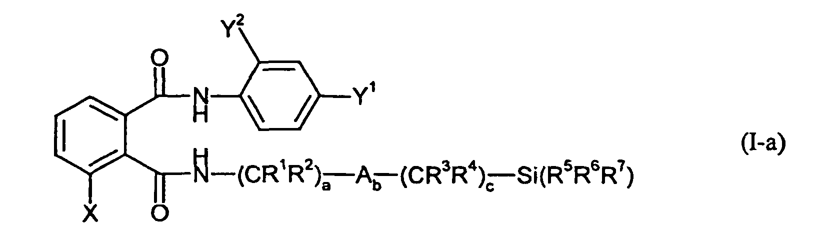 in welcher
- Y¹ und Y²: unabhängig voneinander die oben angegebenen Bedeutungen des Restes Y haben,
- A: für Schwefel oder Sauerstoff steht,
- b: für 0 oder 1 steht und
- X, R¹, R², R³, R⁴, R⁵, R⁶, R⁷, a und c: die oben angegebenen Bedeutungen haben.

Weiterhin ganz besonders bevorzugt sind Verbindungen der Formel (I-b) 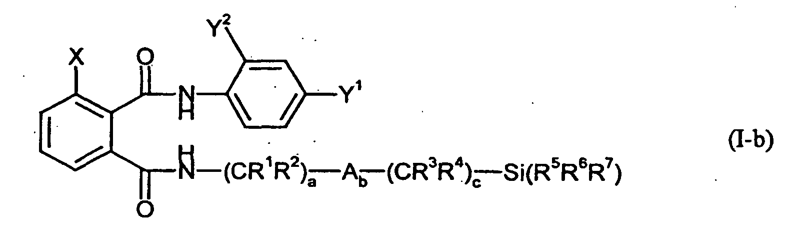 in welcher
- Y¹ und Y²: unabhängig voneinander die oben angegebenen Bedeutungen des Restes Y haben,
- A: für Schwefel oder Sauerstoff steht,
- b: für 0 oder 1 steht und
- X, R¹, R², R³, R⁴, R⁵, R⁶, R⁷, a und c: die oben angegebenen Bedeutungen haben.

Weiterhin ganz besonders bevorzugt sind Verbindungen der Formeln (I-a) und (I-b), in welchen
- A: für SO oder SO₂ steht.

Weiterhin ganz besonders bevorzugt sind Verbindungen der Formeln (I-a) und (I-b), in welchen

Y¹ und Y² unabhängig voneinander die oben angegebenen bevorzugten oder besonders bevorzugten Bedeutungen des Restes Y haben,
- A: für S(O)_{d} oder Sauerstoff steht,
- b: für 0 oder 1 steht,
- d: für 0, 1 oder 2 steht und
X, R¹, R², R³, R⁴, R⁵, R⁶, R⁷, a und c die oben angegebenen bevorzugten oder besonders bevorzugten Bedeutungen haben.

Weiterhin bevorzugt sind Verbindungen der Formel (I), in welcher R⁵, R⁶ und R⁷ jeweils für Methyl stehen.

Weiterhin bevorzugt sind Verbindungen der Formel (I), in welcher A für S, SO oder SO₂ steht.

Weiterhin bevorzugt sind Verbindungen der Formeln (I-a) und (I-b), in welcher Y¹ für Trifluormethyl, Pentafluorethyl, n-Heptafluorpropyl, i-Heptafluorpropyl, bevorzugt für i-Heptafluorpropyl steht.

Weiterhin bevorzugt sind Verbindungen der Formeln (I-a) und (I-b), in welcher Y² für Methyl steht.

Gesättigte Kohlenwasserstoffreste wie Alkyl können, auch in Verbindung mit Heteroatomen, wie z.B. in Alkoxy, soweit möglich, jeweils geradkettig oder verzweigt sein.

Die oben aufgeführten allgemeinen oder in Vorzugsbereichen aufgeführten Restedefinitionen bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Verwendet man 4-Chlor-2-{2-methyl-4-[1,2,2,2-tetrafluor-1-(trifluoromethyl)ethyl]-phenyl}-1H-isoindol-1,3(2H)-dion und 1-{[(Trimethylsilyl)methyl]sulfanyl}-2-propanamin als Ausgangsstoffe, so kann der Verlauf des erfindungsgemäßen Verfahrens durch das folgende Formelschema veranschaulicht werden.

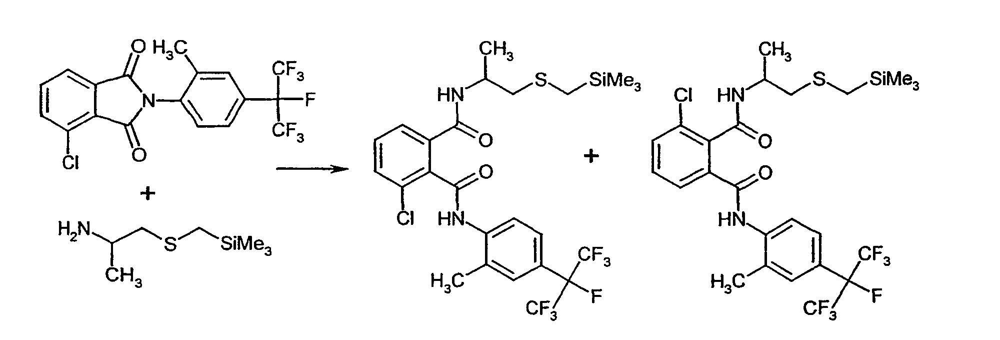

Die bei der Durchführung des erfindungsgemäßen Verfahrens als Ausgangsstoffe benötigten Imide sind durch die Formel (II) allgemein definiert. In dieser Formel stehen X, Y, n und m bevorzugt, besonders bevorzugt bzw. ganz besonders bevorzugt für diejenigen Bedeutungen, die bereits in Zusammenhang mit der Beschreibung der erfindungsgemäßen Verbindungen der Formel (I) für diese Reste als bevorzugt, besonders bevorzugt etc. genannt wurden.

Imide der Formel (II) sind bekannt (vgl. EP 0 919 542 A und EP 1 006 107 A).

Die bei der Durchführung des erfindungsgemäßen Verfahrens als Ausgangsstoffe benötigten Silylamine sind durch die Formel (III) allgemein definiert. In dieser Formel stehen R¹, R², R³, R⁴, R⁵, R⁶, R⁷, A, a, b und c bevorzugt, besonders bevorzugt bzw. ganz besonders bevorzugt für diejenigen Bedeutungen, die bereits in Zusammenhang mit der Beschreibung der erfindungsgemäßen Verbindungen der Formel (I) für diese Reste als bevorzugt, besonders bevorzugt etc. genannt wurden.

Silylamine der Formel (III) sind teilweise bekannt (vgl. Tetrahedron Lett. 1999, 40, 4467).

Silylamine der Formel (III-a) 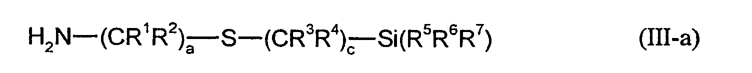 in welcher
R¹, R², R³, R⁴, R⁵, R⁶, R⁷, a und c die oben angegebenen Bedeutungen haben,
lassen sich beispielsweise herstellen, indem man
Aziridine der Formel (IV) 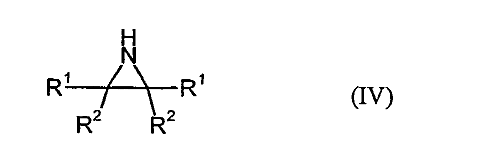 in welcher
R¹ und R² die oben angegebenen Bedeutungen haben,
mit Thiolen der Formel (V) 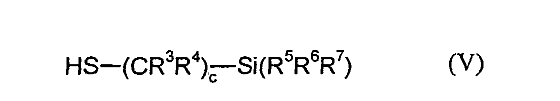 in welcher
R³, R⁴, R⁵, R⁶, R⁷ und c die oben angegebenen Bedeutungen haben,
gegebenenfalls in Gegenwart eines Verdünnungsmittels (z.B. Methanol) umsetzt (vgl. J. Org. Chem. 1963, 28, 1496).

Als Verdünnungsmittel kommen bei der Durchführung des erfindungsgemäßen Verfahrens jeweils alle üblichen inerten, organischen Solventien in Frage. Vorzugsweise verwendbar sind gegebenenfalls halogenierte aliphatische, alicyclische oder aromatische Kohlenwasserstoffe, wie Petrolether, Hexan, Heptan, Cyclohexan, Methylcyclohexan, Benzol, Toluol, Xylol oder Decalin; Chlorbenzol, Dichlorbenzol, Dichlormethan, Chloroform, Tetrachlormethan, Dichlorethan oder Trichlorethan; Ether, wie Diethylether, Diisopropylether, Methyl-t-butylether, Methyl-t-amylether, Dioxan, Tetrahydrofuran, 1,2-Dimethoxyethan, 1,2-Diethoxyethan oder Anisol; Nitrile, wie Acetonitril, Propionitril, n- oder i-Butyronitril oder Benzonitril; Amide, wie N,N-Dimethylformamid, N,N-Dimethylacetamid, N-Methylformanilid, N-Methylpyrrolidon oder Hexamethylphosphorsäuretriamid; Ester wie Essigsäuremethylester oder Essigsäureethylester, Sulfoxide, wie Dimethylsulfoxid oder Sulfone, wie Sulfolan; Carbonsäuren, wie Ameisensäure oder Essigsäure. Besonders bevorzugt arbeitet man in Essigsäure oder ohne Verdünnungsmittel.

Die Reaktionstemperaturen können bei der Durchführung des erfindungsgemäßen Verfahrens jeweils in einem größeren Bereich variiert werden. Im allgemeinen arbeitet man bei Temperaturen zwischen 20°C und 150°C, vorzugsweise zwischen 50°C und 120°C.

Bei der Durchführung des erfindungsgemäßen Verfahrens setzt man auf 1 Mol an Verbindung der Formel (II) im allgemeinen 1 bis 3 Mol einer Verbindung der Formel (III) ein. Es ist jedoch auch möglich, die Reaktionskomponenten in anderen Verhältnissen einzusetzen. Die Aufarbeitung erfolgt nach üblichen Methoden. Im allgemeinen verfährt man in der Weise, dass man das Reaktionsgemisch einengt, in einem geeigneten Lösungsmittel aufnimmt und das Produkt durch Chromatographie von eventuell noch vorhandenen Verunreinigungen befreit.

Bei der Durchführung aller erfindungsgemäßen Verfahren arbeitet man im allgemeinen unter Atmosphärendruck. Es ist aber auch möglich, jeweils unter erhöhtem oder vermindertem Druck zu arbeiten.

Die erfindungsgemäßen Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spp.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Acheta domesticus, Gryllotalpa spp., Locusta migratoria migratorioides, Melanoplus spp., Schistocerca gregaria.
Aus der Ordnung der Blattaria z.B. Blatta orientalis, Periplaneta americana, Leucophaea maderae, Blattella germanica.
Aus der Ordnung der Dermaptera z.B. Forficula auricularia.
Aus der Ordnung der Isoptera z.B. Reticulitermes spp..
Aus der Ordnung der Phthiraptera z.B. Pediculus humanus corporis, Haematopinus spp., Linognathus spp., Trichodectes spp., Damalinia spp..
Aus der Ordnung der Thysanoptera z.B. Hercinothrips femoralis, Thrips tabaci, Thrips palmi, Frankliniella accidentalis.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.
Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp..
Aus der Ordnung der Siphonaptera z.B. Xenopsylla cheopis, Ceratophyllus spp..
Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp..

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp..

Die erfindungsgemäßen Verbindungen der Formel (I) zeichnen sich insbesondere durch eine hervorragende Wirkung gegen Raupen, Käferlarven, Spinnmilben, Blattläuse und Minierfliegen aus.

Die erfindungsgemäßen Verbindungen können gegebenenfalls in bestimmten Konzentrationen bzw. Aufwandmengen auch als Herbizide und Mikrobizide, beispielsweise als Fungizide, Antimykotika und Bakterizide verwendet werden. Sie lassen sich gegebenenfalls auch als Zwischen- oder Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z.B. durch Vermischen der erfindungsgemäßen Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln;
als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate;
als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 %.

Die erfindungsgemäßen Wirkstoffe können in handelsüblichen Formulierungen sowie in den aus diesen Formulierungen bereiteten Anwendungsformen in Mischung mit anderen Wirkstoffen, wie Insektiziden, Lockstoffen, Sterilantien, Bakteriziden, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Besonders günstige Mischpartner sind z.B. die folgenden:

### Fungizide:

Aldimorph, Ampropylfos, Ampropylfos-Kalium, Andoprim, Anilazin, Azaconazol, Azoxystrobin,
Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,
Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropicrin, Chlorothalonil, Chlozolinat, Clozylacon, Cufraneb, Cymoxanil, Cyproconazol, Cyprodinil, Cyprofuram,
Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,
Ediphenphos, Epoxiconazol, Etaconazol, Ethirimol, Etridiazol,
Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Alminium, Fosetyl-Natrium, Fthalid, Fuberidazol, Furalaxyl, Furametpyr, Furcarbonil, Furconazol, Furconazol-cis, Furmecyclox, Guazatin, Hexachlorobenzol, Hexaconazol, Hymexazol,
Imazalil, Imibenconazol, Iminoctadin, Iminoctadinealbesilat, Iminoctadinetriacetat, Iodocarb, Ipconazol, Iprobenfos (IBP), Iprodione, Irurnamycin, Isoprothiolan, Isovaledione,
Kasugamycin, Kresoxim-methyl, Kupfer-Zubereitungen, wie: Kupferhydroxid, Kupfernaphthenat, Kupferoxychlorid, Kupfersulfat, Kupferoxid, Oxin-Kupfer und Bordeaux-Mischung,
Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,
Nickel-dimethyldithiocarbamat, Nitrothal-isopropyl, Nuarimol,
Ofurace, Oxadixyl, Oxamocarb, Oxolinicacid, Oxycarboxim, Oxyfenthiin,
Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,
Quinconazol, Quintozen (PCNB),
Schwefel und Schwefel-Zubereitungen,
Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofos-methyl, Tolylfluanid, Triadimefon, Triadimenol, Triazbutil, Triazoxid, Trichlamid, Tricyclazol, Tridemorph, Triflumizol, Triforin, Triticonazol,
Uniconazol,
Validamycin A, Vinclozolin, Viniconazol,
Zarilamid, Zineb, Ziram sowie
Dagger G, OK-8705, OK-8801,
α-(1,1-Dimethylethyl)-β-(2-phenoxyethyl)-1H-1,2,4-triazol-1-ethanol,
α-(2,4-Dichlorphenyl)-β-fluor-β-propyl-1H-1,2,4-triazol-1-ethanol,
α-(2,4-Dichlorphenyl)-β-methoxy-α-methyl-1H-1,2,4-triazol-1-ethanol,
α-(5-Methyl-1,3-dioxan-5-yl)-β-[[4-(trifluormethyl)-phenyl]-methylen]-1H-1,2,4-triazol-1-ethanol,
(5RS,6RS)-6-Hydroxy-2,2,7,7-tetramethyl-5-(1H-1,2,4-triazol-1-yl)-3-octanon,
(E)-α-(Methoxyimino)-N-methyl-2-phenoxy-phenylacetamid,
{2-Methyl-1-[[[1-(4-methylphenyl)-ethyl]-amino]-carbonyl]-propyl}-carbaminsäure-1-isopropylester
1-(2,4-Dichlorphenyl)-2-(1H-1,2,4-triazol-1-yl)-ethanon-O-(phenylmethyl)-oxim,
1-(2-Methyl-1-naphthalenyl)-1H-pyrrol-2,5-dion,
1-(3,5-Dichlorphenyl)-3-(2-propenyl)-2,5-pyrrolidindion,
1-[(Diiodmethyl)-sulfonyl]-4-methyl-benzol,
1-[[2-(2,4-Dichlorphenyl)-1,3-dioxolan-2-yl]-methyl]-1H-imidazol,
1-[[2-(4-Chlorphenyl)-3-phenyloxiranyl]-methyl]-1H-1,2,4-triazol,
1-[1-[2-[(2,4-Dichlorphenyl)-methoxy]-phenyl]-ethenyl]-1H-imidazol,
1-Methyl-5-nonyl-2-(phenylmethyl)-3-pyrrolidinol,
2',6'-Dibrom-2-methyl-4'-trifluormethoxy-4'-trifluor-methyl-1,3-thiazol-5-carboxanilid,
2,2-Dichlor-N-[1-(4-chlorphenyl)-ethyl]-1-ethyl-3-methyl-cyclopropancarboxamid,
2,6-Dichlor-5-(methylthio)-4-pyrimidinyl-thiocyanat,
2,6-Dichlor-N-(4-trifluormethylbenzyl)-benzamid,
2,6-Dichlor-N-[[4-(trifluormethyl)-phenyl]-methyl]-benzamid,
2-(2,3,3-Triiod-2-propenyl)-2H-tetrazol,
2-[(1-Methylethyl)-sulfonyl]-5-(trichlormethyl)-1,3,4-thiadiazol,
2-[[6-Deoxy-4-O-(4-O-methyl-β-D-glycopyranosyl)-α-D-glucopyranosyl]-amino]-4-methoxy-1H-pyrrolo[2,3-d]pyrimidin-5-carbonitril,
2-Aminobutan,
2-Brom-2-(brommethyl)-pentandinitril,
2-Chlor-N-(2,3-dihydro-1,1,3-trimethyl-1H-inden-4-yl)-3-pyridincarboxamid,
2-Chlor-N-(2,6-dimethylphenyl)-N-(isothiocyanatomethyl)-acetamid,
2-Phenylphenol(OPP),
3,4-Dichlor-1-[4-(difluormethoxy)-phenyl]-1H-pyrrol-2,5-dion,
3,5-Dichlor-N-[cyan[(1-methyl-2-propynyl)-oxy]-methyl]-benzamid,
3-(1,1-Dimethylpropyl-1-oxo-1H-inden-2-carbonitril,
3-[2-(4-Chlorphenyl)-5-ethoxy-3-isoxazolidinyl]-pyridin,
4-Chlor-2-cyan-N,N-dimethyl-5-(4-methylphenyl)-1H-imidazol-1-sulfonamid,
4-Methyl-tetrazolo[1,5-a]quinazolin-5(4H)-on,
8-(1,1-Dimethylethyl)-N-ethyl-N-propyl-1,4-dioxaspiro[4.5]decan-2-methanamin,
8-Hydroxychinolinsulfat,
9H-Xanthen-9-carbonsäure-2-[(phenylamino)-carbonyl]-hydrazid,
bis-(1-Methylethyl)-3-methyl-4-[(3-methylbenzoyl)-oxy]-2,5-thiophendicarboxylat,
cis-1-(4-Chlorphenyl)-2-(1H-1,2,4-triazol-1-yl)-cycloheptanol,
cis-4-[3-[4-(1,1-Dimethylpropyl)-phenyl-2-methylpropyl]-2,6-dimethyl-morpholin-hydrochlorid,
Ethyl-[(4-chlorphenyl)-azo]-cyanoacetat,
Kaliumhydrogencarbonat,
Methantetrathiol-Natriumsalz,
Methyl-1-(2,3-dihydro-2,2-dimethyl-1H-inden-1-yl)-1H-imidazol-5-carboxylat,
Methyl-N-(2,6-dimethylphenyl)-N-(5-isoxazolylcarbonyl)-DL-alaninat,
Methyl-N-(chloracetyl)-N-(2,6-dimethylphenyl)-DL-alaninat,
N-(2,3-Dichlor-4-hydroxyphenyl)-1-methyl-cyclohexancarboxamid.
N-(2,6-Dimethylphenyl)-2-methoxy-N-(tetrahydro-2-oxo-3-furanyl)-acetamid,
N-(2,6-Dimethylphenyl)-2-methoxy-N-(tetrahydro-2-oxo-3-thienyl)-acetamid,
N-(2-Chlor-4-nitrophenyl)-4-methyl-3-nitro-benzolsulfonamid,
N-(4-Cyclohexylphenyl)-1,4,5,6-tetrahydro-2-pyrimidinamin,
N-(4-Hexylphenyl)-1,4,5,6-tetrahydro-2-pyrimidinamin,
N-(5-Chlor-2-methylphenyl)-2-methoxy-N-(2-oxo-3-oxazolidinyl)-acetamid,
N-(6-Methoxy)-3-pyridinyl)-cyclopropancarboxamid,
N-[2,2,2-Trichlor-1-[(chloracetyl)-amino]-ethyl]-benzamid,
N-[3-Chlor-4,5-bis-(2-propinyloxy)-phenyl]-N'-methoxy-methanimidamid,
N-Formyl-N-hydroxy-DL-alanin -Natriumsalz,
O,O-Diethyl-[2-(dipropylamino)-2-oxoethyl]-ethylphosphoramidothioat,
O-Methyl-S-phenyl-phenylpropylphosphoramidothioat,
S-Methyl-1,2,3-benzothiadiazol-7-carbothioat,
spiro[2H]-1-Benzopyran-2,1'(3'H)-isobenzofuran]-3'-on,

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Abamectin, Acephate, Acetamiprid, Acrinathrin, Alanycarb, Aldicarb, Aldoxycarb, Alpha-cypermethrin, Alphamethrin, Amitraz, Avermectin, AZ 60541, Azadirachtin, Azamethiphos, Azinphos A, Azinphos M, Azocyclotin,
Bacillus popilliae, Bacillus sphaericus, Bacillus subtilis, Bacillus thuringiensis, Baculoviren, Beauveria bassiana, Beauveria tenella, Bendiocarb, Benfuracarb, Bensultap, Benzoximate, Betacyfluthrin, Bifenazate, Bifenthrin, Bioethanomethrin, Biopermethrin, BPMC, Bromophos A, Bufencarb, Buprofezin, Butathiofos, Butocarboxim, Butylpyridaben,
Cadusafos, Carbaryl, Carbofuran, Carbophenothion, Carbosulfan, Cartap, Chloethocarb, Chlorethoxyfos, Chlorfenapyr, Chlorfenvinphos, Chlorfluazuron, Chlormephos, Chlorpyrifos, Chlorpyrifos M, Chlovaporthrin, Cis-Resmethrin, Cispermethrin, Clocythrin, Cloethocarb, Clofentezine, Cyanophos, Cycloprene, Cycloprothrin, Cyfluthrin, Cyhalothrin, Cyhexatin, Cypermethrin, Cyromazine,
Deltamethrin, Demeton M, Demeton S, Demeton-S-methyl, Diafenthiuron, Diazinon, Dichlorvos, Diflubenzuron, Dimethoat, Dimethylvinphos, Diofenolan, Disulfoton, Docusat-sodium, Dofenapyn,
Eflusilanate, Emamectin, Empenthrin, Endosulfan, Entomopfthora spp., Eprinomectin, Esfenvalerate, Ethiofencarb, Ethion, Ethoprophos, Etofenprox, Etoxazole, Etrimfos,
Fenamiphos, Fenazaquin, Fenbutatin oxide, Fenitrothion, Fenothiocarb, Fenoxacrim, Fenoxycarb, Fenpropathrin, Fenpyrad, Fenpyrithrin, Fenpyroximate, Fenvalerate, Fipronil, Fluazuron, Flubrocythrinate, Flucycloxuron, Flucythrinate, Flufenoxuron, Flutenzine, Fluvalinate, Fonophos, Fosmethilan, Fosthiazate, Fubfenprox, Furathiocarb,
Granuloseviren
Halofenozide, HCH, Heptenophos, Hexaflumuron, Hexythiazox, Hydroprene,
Imidacloprid, Isazofos, Isofenphos, Isoxathion, Ivermectin,
Kempolyederviren
Lambda-cyhalothrin, Lufenuron
Malathion, Mecarbam, Metaldehyd, Methamidophos, Metharhizium anisopliae, Metharhizium flavoviride, Methidathion, Methiocarb, Methomyl, Methoxyfenozide, Metolcarb, Metoxadiazone, Mevinphos, Milbemectin, Monocrotophos,
Naled, Nitenpyram, Nithiazine, Novaluron
Omethoat, Oxamyl, Oxydemethon M
Paecilomyces fumosoroseus, Parathion A, Parathion M, Permethrin, Phenthoat, Phorat, Phosalone, Phosmet, Phosphamidon, Phoxim, Pirimicarb, Pirimiphos A, Pirimiphos M, Profenofos, Promecarb, Propoxur, Prothiofos, Prothoat, Pymetrozine, Pyraclofos, Pyresmethrin, Pyrethrum, Pyridaben, Pyridathion, Pyrimidifen, Pyriproxyfen,
Quinalphos,
Ribavirin
Salithion, Sebufos, Selamectin, Silafluofen, Spinosad, Sulfotep, Sulprofos,
Tau-fluvalinate, Tebufenozide, Tebufenpyrad, Tebupirimiphos, Teflubenzuron, Tefluthrin, Temephos, Temivinphos, Terbufos, Tetrachlorvinphos, Theta-cypermethrin, Thiamethoxam, Thiapronil, Thiatriphos, Thiocyclam hydrogen oxalate, Thiodicarb, Thiofanox, Thuringiensin, Tralocythrin, Tralomethrin, Triarathene, Triazamate, Triazophos, Triazuron, Trichlophenidine, Trichlorfon, Triflumuron, Trimethacarb,
Vamidothion, Vaniliprole, Verticillium lecanii
YI 5302
Zeta-cypermethrin, Zolaprofos
(1R-cis)-[5-(Phenylmethyl)-3-furanyl]-methyl-3-[(dihydro-2-oxo-3(2H)-furanyliden)-methyl]-2,2-dimethylcyclopropancarboxylat
(3-Phenoxyphenyl)-methyl-2,2,3,3-tetramethylcyclopropanecarboxylat
1-[(2-Chlor-5-thiazolyl)methyl]tetrahydro-3,5-dimethyl-N-nitro-1,3,5-triazin-2(1H)-imin
2-(2-Chlor-6-fluorphenyl)-4-[4-(1,1-dimethylethyl)phenyl]-4,5-dihydro-oxazol
2-(Acetlyoxy)-3-dodecyl-1,4-naphthalindion
2-Chlor-N-[[[4-(1-phenylethoxy)-phenyl]-amino]-carbonyl]-benzamid
2-Chlor-N-[[[4-(2,2-dichlor-1,1-difluorethoxy)-phenyl]-amino]-carbonyl]-benzamid
3-Methylphenyl-propylcarbamat
4-[4-(4-Ethoxyphenyl)-4-methylpentyl]-1-fluor-2-phenoxy-benzol
4-Chlor-2-(1,1-dimethylethyl)-5-[[2-(2,6-dimethyl-4-phenoxyphenoxy)ethyl]thio]-3(2H)-pyridazinon
4-Chlor-2-(2-chlor-2-methylpropyl)-5-[(6-iod-3-pyridinyl)methoxy]-3(2H)-pyridazinon
4-Chlor-5-[(6-chlor-3-pyridinyl)methoxy]-2-(3,4-dichlorphenyl)-3(2H)-pyridazinon
Bacillus thuringiensis strain EG-2348
Benzoesäure [2-benzoyl-1-(1,1-dimethylethyl)-hydrazid
Butansäure 2,2-dimethyl-3-(2,4-dichlorphenyl)-2-oxo-1-oxaspiro[4.5]dec-3-en-4-yl-ester
[3-[(6-Chlor-3-pyridinyl)methyl]-2-thiazolidinyliden]-cyanamid
Dihydro-2-(nitromethylen)-2H-1,3-thiazine-3(4H)-carboxaldehyd
Ethyl-[2-[[1,6-dihydro-6-oxo-1-(phenylmethyl)-4-pyridazinyl]oxy]ethyl]-carbamat
N-(3,4,4-Trifluor-1-oxo-3-butenyl)-glycin
N-(4-Chlorphenyl)-3-[4-(difluormethoxy)phenyl]-4,5-dihydro-4-phenyl-1H-pyrazol-1-carboxamid
N-[(2-Chlor-5-thiazolyl)methyl]-N'-methyl-N"-nitro-guanidin
N-Methyl-N'-(1-methyl-2-propenyl)-1,2-hydrazindicarbothioamid
N-Methyl-N'-2-propenyl-1,2-hydrazindicarbothioamid
O,O-Diethyl-[2-(dipropylamino)-2-oxoethyl]-ethylphosphoramidothioat
Auch eine Mischung mit anderen bekannten Wirkstoffen, wie Herbiziden oder mit Düngemitteln und Wachstumsregulatoren ist möglich.

Die erfindungsgemäßen Wirkstoffe können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der erfindungsgemäßen Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Bei der Anwendung gegen Hygiene- und Vorratsschädlinge zeichnet sich der Wirkstoff durch eine hervorragende Residualwirkung auf Holz und Ton sowie durch eine gute Alkalistabilität auf gekälkten Unterlagen aus.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit bestimmten Eigenschaften ("Traits"), die sowohl durch konventionelle Züchtung, durch Mutagenese oder durch rekombinante DNA-Techniken erhalten worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch über additive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen. Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").
Die aufgeführten Pflanzen können besonders vorteilhaft erfindungsgemäß mit den Verbindungen der allgemeinen Formel (I) bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäßen Wirkstoffe wirken nicht nur gegen Pflanzen-, Hygiene- und Vorratsschädlinge, sondern auch auf dem veterinärmedizinischen Sektor gegen tierische Parasiten (Ektoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:
Aus der Ordnung der Anoplurida z.B. Haematopinus spp., Linognathus spp., Pediculus spp., Phtirus spp., Solenopotes spp..
Aus der Ordnung der Mallophagida und den Unterordnungen Amblycerina sowie Ischnocerina z.B. Trimenopon spp., Menopon spp., Trinoton spp., Bovicola spp., Wemeckiella spp., Lepikentron spp., Damalina spp., Trichodectes spp., Felicola spp..
Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..
Aus der Ordnung der Siphonapterida z.B. Pulex spp., Ctenocephalides spp., Xenopsylla spp., Ceratophyllus spp..
Aus der Ordnung der Heteropterida z.B. Cimex spp., Triatoma spp., Rhodnius spp., Panstrongylus spp..
Aus der Ordnung der Blattarida z.B. Blatta orientalis, Periplaneta americana, Blattella germanica, Supella spp..
Aus der Unterklasse der Acaria (Acarida) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..
Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Beispielsweise zeigen sie eine hervorragende Wirksamkeit gegen die Entwicklungsstadien von Zecken wie zum Beispiel Amblyomma hebraeum, gegen parasitierende Fliegen wie zum Beispiel gegen Lucilia cuprina, gegen Flöhe wie zum Beispiel Ctenocephalides felis.

Die erfindungsgemäßen Wirkstoffe der Formel (I) eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser Arthropoden sollen Todesfälle und Leistungsminderungen (bei Fleisch, Milch, Wolle, Häuten, Eiern, Honig usw.) vermindert werden, so dass durch den Einsatz der erfindungsgemäßen Wirkstoffe eine wirtschaftlichere und einfachere Tierhaltung möglich ist.

Die Anwendung der erfindungsgemäßen Wirkstoffe geschieht im Veterinärsektor in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpuderns sowie mit Hilfe von wirkstofflialtigen Formkörpern, wie Halsbändern, Ohrmarken, Schwanzmarken, Gliedmaßenbändern, Halftern, Markierungsvorrichtungen usw.

Bei der Anwendung für Vieh, Creflügel, Haustiere etc. kann man die erfindungsgemäßen Wirkstoffe der Formel (I) als Formulierungen (beispielsweise Pulver, Emulsionen, fließfähige Mittel), die die erfindungsgemäßen Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, dass die erfmdungsgemäßen Verbindungen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie
Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus.

Hautflügler wie
Sirex juvencus, Urocerus gigas, Urocerus gigas taignus, Urocerus augur.

Termiten wie
Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus.

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Aristrichmittel.

Ganz besonders bevorzugt handelt es sich bei dem vor Insektenbefall zu schützenden Material um Holz und Holzverarbeitungsprodukte.

Unter Holz und Holzverarbeitungsprodukten, welche durch das erfindungsgemäße Mittel bzw. dieses enthaltende Mischungen geschützt werden kann, ist beispielhaft zu verstehen:

Bauholz, Holzbalken, Eisenbahnschwellen, Brückenteile, Bootsstege, Holzfahrzeuge, Kisten, Paletten, Container, Telefonmasten, Holzverkleidungen, Holzfenster und - türen, Sperrholz, Spanplatten, Tischlerarbeiten oder Holzprodukte, die ganz allgemein beim Hausbau oder in der Bautischlerei Verwendung finden.

Die erfindungsgemäßen Wirkstoffe können als solche, in Form von Konzentraten oder allgemein üblichen Formulierungen wie Pulver, Granulate, Lösungen, Suspensionen, Emulsionen oder Pasten angewendet werden.
Die genannten Formulierungen können in an sich bekannter Weise hergestellt werden, z.B. durch Vermischen der erfindungsgemäßen Wirkstoffe mit mindestens einem Lösungs- bzw. Verdünnungsmittel, Emulgator, Dispergier- und/oder Bindeoder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die zum Schutz von Holz und Holzwerkstoffen verwendeten insektiziden Mittel oder Konzentrate enthalten den erfindungsgemäßen Wirkstoff in einer Konzentration von 0,0001 bis 95 Gew.-%, insbesondere 0,001 bis 60 Gew.-%.

Die Menge der eingesetzten Mittel bzw. Konzentrate ist von der Art und dem Vorkommen der Insekten und von dem Medium abhängig. Die optimale Einsatzmenge kann bei der Anwendung jeweils durch Testreihen ermittelt werden. Im allgemeinen ist es jedoch ausreichend 0,0001 bis 20 Gew.-%, vorzugsweise 0,001 bis 10 Gew.-%, des Wirkstoffs, bezogen auf das zu schützende Material, einzusetzen.

Als Lösungs- und/oder Verdünnungsmittel dient ein organisch-chemisches Lösungsmittel oder Lösungsmittelgemisch und/oder ein öliges oder ölartiges schwer flüchtiges organisch-chemisches Lösungsmittel oder Lösungsmittelgemisch und/oder ein polares organisch-chemisches Lösungsmittel oder Lösungsmittelgemisch und/oder Wasser und gegebenenfalls einen Emulgator und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwer flüchtige, wasserunlösliche, ölige und ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindelöl mit einem Siedebereich von 250 bis 350°C, Petroleum bzw. Aromaten vom Siedebereich von 160 bis 280°C, Terpentinöl und dgl. zum Einsatz.

In einer bevorzugten Ausführungsform werden flüssige aliphatische Kohlenwasserstoffe mit einem Siedebereich von 180 bis 210°C oder hochsiedende Gemische von aromatischen und aliphatischen Kohlenwasserstoffen mit einem Siedebereich von 180 bis 220°C und/oder Spindelöl und/oder Monochlornaphthalin, vorzugsweise α-Monochlornaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, dass das Lösungsmittelgemisch ebenfalls eine Verdunstungszahl über 35 und einen Flammpunkt oberhalb 30°C, vorzugsweise oberhalb 45°C, aufweist und dass das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittel oder Lösungsmittelgemisches oder ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycolether, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemische Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100 % des eingesetzten Bindemittels).

Die Weichmacher stammen aus den chemischen Klassen der Phthalsäureester wie Dibutyl-, Dioctyl- oder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethem wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Ein besonders effektiver Holzschutz wird durch großtechnische Imprägnierverfahren, z.B. Vakuum, Doppelvakuum oder Druckverfahren, erzielt.

Die anwendungsfertigen Mittel können gegebenenfalls noch weitere Insektizide und gegebenenfalls noch ein oder mehrere Fungizide enthalten.

Als zusätzliche Zumischpartner kommen vorzugsweise die in der WO 94/29 268 genannten Insektizide und Fungizide in Frage. Die in diesem Dokument genannten Verbindungen sind ausdrücklicher Bestandteil der vorliegenden Anmeldung.
Als ganz besonders bevorzugte Zumischpartner können Insektizide, wie Chlorpyriphos, Phoxim, Silafluofin, Alphamethrin, Cyfluthrin, Cypermethrin, Deltamethrin, Permethrin, Imidacloprid, NI-25, Flufenoxuron, Hexaflumuron, Transfluthrin, Thiacloprid, Methoxyfenozid und Triflumuron, sowie Fungizide wie Epoxyconazole, Hexaconazole, Azaconazole, Propiconazole, Tebuconazole, Cyproconazole, Metconazole, Imazalil, Dichlorfluanid, Tolylfluanid, 3-Iod-2-propinyl-butylcarbamat, N-Octyl-isothiazolin-3-on und 4,5-Dichlor-N-octylisothiazolin-3-on, sein.

Zugleich können die erfindungsgemäßen Verbindungen zum Schutz vor Bewuchs von Gegenständen, insbesondere von Schiffskörpem, Sieben, Netzen, Bauwerken, Kaianlagen und Signalanlagen, welche mit See- oder Brackwasser in Verbindung kommen, eingesetzt werden.

Bewuchs durch sessile Oligochaeten, wie Kalkröhrenwürmer sowie durch Muscheln und Arten der Gruppe Ledamorpha (Entenmuscheln), wie verschiedene Lepas- und Scalpellum-Arten, oder durch Arten der Gruppe Balanomorpha (Seepocken), wie Balanus- oder Pollicipes-Species, erhöht den Reibungswiderstand von Schiffen und führt in der Folge durch erhöhten Energieverbrauch und darüber hinaus durch häufige Trockendockaufenthalte zu einer deutlichen Steigerung der Betriebskosten.

Neben dem Bewuchs durch Algen, beispielsweise Ectocarpus sp. und Ceramium sp., kommt insbesondere dem Bewuchs durch sessile Entomostraken-Gruppen, welche unter dem Namen Cirripedia (Rankenflusskrebse) zusammengefasst werden, besondere Bedeutung zu.

Es wurde nun überraschenderweise gefunden, dass die erfindungsgemäßen Verbindungen allein oder in Kombination mit anderen Wirkstoffen, eine hervorragende Antifouling (Antibewuchs)-Wirkung aufweisen.

Durch Einsatz von erfindungsgemäßen Verbindungen allein oder in Kombination mit anderen Wirkstoffen, kann auf den Einsatz von Schwermetallen wie z.B. in Bis(trialkylzinn)-sulfiden, Tri-*n*-butylzinnlaurat, Tri-*n*-butylzinnchlorid, Kupfer(I)-oxid, Triethylzinnchlorid, Tri-*n*-butyl(2-phenyl-4-chlorphenoxy)-zinn, Tributylzinnoxid, Molybdändisulfid, Antimonoxid, polymerem Butyltitanat, Phenyl-(bispyridin)-wismutchlorid, Tri-*n*-butylzinnfluorid, Manganethylenbisthiocarbamat, Zinkdimethyldithiocarbamat, Zinkethylenbisthiocarbamat, Zink- und Kupfersalze von 2-Pyridinthiol-1-oxid, Bisdimethyldithiocarbamoylzinkethylenbisthiocarbamat, Zinkoxid, Kupfer(I)-ethylen-bisdithiocarbamat, Kupferthiocyanat, Kupfernaphthenat und Tributylzinnhalogeniden verzichtet werden oder die Konzentration dieser Verbindungen entscheidend reduziert werden.

Die anwendungsfertigen Antifoulingfarben können gegebenenfalls noch andere Wirkstoffe, vorzugsweise Algizide, Fungizide, Herbizide, Molluskizide bzw. andere Antifouling-Wirkstoffe enthalten.

Als Kombinationspartner für die erfindungsgemäßen Antifouling-Mittel eignen sich vorzugsweise:

Algizide wie
2-*tert*.-Butylamino-4-cyclopropylamino-6-methylthio-1,3,5-triazin, Dichlorophen, Diuron, Endothal, Fentinacetat, Isoproturon, Methabenzthiazuron, Oxyfluorfen, Quinoclamine und Terbutryn;

Fungizide wie
Benzo[*b*]thiophencarbonsäurecyclohexylamid-S,S-dioxid, Dichlofluanid, Fluorfolpet, 3-Iod-2-propinyl-butylcarbamat, Tolylfluanid und Azole wie Azaconazole, Cyproconazole, Epoxyconazole, Hexaconazole, Metconazole, Propiconazole und Tebuconazole;

Molluskizide wie
Fentinacetat, Metaldehyd, Methiocarb, Niclosamid, Thiodicarb und Trimethacarb; oder herkömmliche Antifouling-Wirkstoffe wie 4,5-Dichlor-2-octyl-4-isothiazolin-3-on, Düodmethylparatrylsulfon, 2-(N,N-Dimethylthiocarbamoylthio)-5-nitrothiazyl, Kalium-, Kupfer-, Natrium- und Zinksalze von 2-Pyridinthiol-1-oxid, Pyridin-triphenylboran, Tetrabutyldistannoxan, 2,3,5,6-Tetrachlor-4-(methylsulfonyl)-pyridin, 2,4,5,6-Tetrachloroisophthalonitril, Tetramethylthiuramdisulfid und 2,4,6-Trichlorphenylmaleinimid.

Die verwendeten Antifouling-Mittel enthalten die erfindungsgemäßen Wirkstoff der erfindungsgemäßen Verbindungen in einer Konzentration von 0,001 bis 50 Gew.-%, insbesondere von 0,01 bis 20 Gew.-%.

Die erfindungsgemäßen Antifouling-Mittel enthalten des weiteren die üblichen Bestandteile wie z.B. in Ungerer, *Chem. Ind*. **1985,** 37, 730-732 und Williams, Antifouling Marine Coatings, Noyes, Park Ridge, **1973** beschrieben.

Antifouling-Anstrichmittel enthalten neben den algiziden, fungiziden, molluskiziden und erfindungsgemäßen insektiziden Wirkstoffen insbesondere Bindemittel.

Beispiele für anerkannte Bindemittel sind Polyvinylchlorid in einem Lösungsmittelsystem, chlorierter Kautschuk in einem Lösungsmittelsystem, Acrylharze in einem Lösungsmittelsystem insbesondere in einem wässrigen System, Vinylchlorid/Vinylacetat-Copolymersysteme in Form wässriger Dispersionen oder in Form von organischen Lösungsmittelsystemen, Butadien/Styrol/Acrylnitril-Kautschuke, trocknende Öle, wie Leinsamenöl, Harzester oder modifizierte Hartharze in Kombination mit Teer oder Bitumina, Asphalt sowie Epoxyverbindungen, geringe Mengen Chlorkautschuk, chloriertes Polypropylen und Vinylharze.

Gegebenenfalls enthalten Anstrichmittel auch anorganische Pigmente, organische Pigmente oder Farbstoffe, welche vorzugsweise in Seewasser unlöslich sind. Ferner können Anstrichmittel Materialien, wie Kolophonium enthalten, um eine gesteuerte Freisetzung der Wirkstoffe zu ermöglichen. Die Anstriche können ferner Weichmacher, die rheologischen Eigenschaften beeinflussende Modifizierungsmittel sowie andere herkömmliche Bestandteile enthalten. Auch in Self-Polishing-Antifouling-Systemen können die erfindungsgemäßen Verbindungen oder die oben genannten Mischungen eingearbeitet werden.

Die erfindungsgemäßen Wirkstoffe eignen sich auch zur Bekämpfung von tierischen Schädlingen, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:
Aus der Ordnung der Scorpionidea z.B. Buthus occitanus.
Aus der Ordnung der Acarina z.B. Argas persicus, Argas reflexus, Bryobia spp., Dermanyssus gallinae, Glyciphagus domesticus, Omithodorus moubat, Rhipicephalus sanguineus, Trombicula alfreddugesi, Neutrombicula autumnalis, Dermatophagoides pteronissimus, Dermatophagoides forinae.
Aus der Ordnung der Araneae z.B. Aviculariidae, Araneidae.
Aus der Ordnung der Opiliones z.B. Pseudoscorpiones chelifer, Pseudoscorpiones cheiridium, Opiliones phalangium.
Aus der Ordnung der Isopoda z.B. Oniscus asellus, Porcellio scaber.
Aus der Ordnung der Diplopoda z.B. Blaniulus guttulatus, Polydesmus spp..
Aus der Ordnung der Chilopoda z.B. Geophilus spp..
Aus der Ordnung der Zygentoma z.B. Ctenolepisma spp., Lepisma saccharina, Lepismodes inquilinus.
Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.
Aus der Ordnung der Saltatoria z.B. Acheta domesticus.
Aus der Ordnung der Dermaptera z.B. Forficula auricularia.
Aus der Ordnung der Isoptera z.B. Kalotermes spp., Reticulitermes spp.
Aus der Ordnung der Psocoptera z.B. Lepinatus spp., Liposcelis spp.
Aus der Ordnung der Coleptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.
Aus der Ordnung der Diptera z.B. Aedes aegypti, Aedes albopictus, Aedes taeniorhynchus, Anopheles spp., Calliphora erythrocephala, Chrysozona pluvialis, Culex quinquefaseiatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.
Aus der Ordnung der Lepidoptera z.B. Achroia grisella, Galleria mellonella, Plodia interpunctella, Tinea cloacella, Tinea pellionella, Tineola bisselliella.
Aus der Ordnung der Siphonaptera z.B. Ctenocephalides canis, Ctenocephalides felis, Pulex irritans, Tunga penetrans, Xenopsylla cheopis.
Aus der Ordnung der Hymenoptera z.B. Camponotus herculeanus, Lasius fuliginosus, Lasius niger, Lasius umbratus, Monomorium pharaonis, Paravespula spp., Tetramorium caespitum.
Aus der Ordnung der Anoplura z.B. Pediculus humanus capitis, Pediculus humanus corporis, Phthirus pubis.
Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestern, Carbamaten, Pyrethroiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Die Herstellung und die Verwendung der erfindungsgemäßen Stoffe geht aus den folgenden Beispielen hervor.

### Herstellungsbeispiele

### Beispiel 1

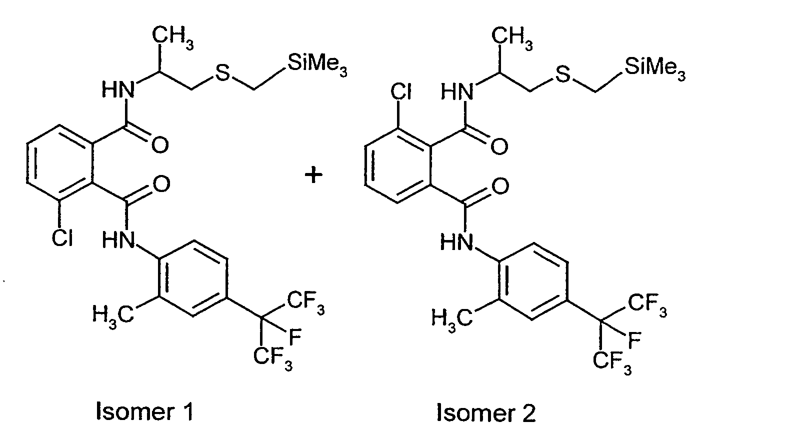

0.50g (1.137 mmol) 4-Chlor-2-{2-methyl-4-[1,2,2,2-tetrafluor-1-(trifluoromethyl)-ethyl]phenyl}-1H-isoindol-1,3(2H)-dion und 0.222g (1.251 mmol) 1-{[(Trimethylsilyl)methyl]sulfanyl}-2-propanamin werden 1 h ohne Lösungsmittel bei 100°C verrührt. Das Rohprodukt wird anschließend durch Säulenchromatographie an Kieselgel (Eluent: Dichlormethan) gereinigt.

### Isomer 1:

### 3-Chlor-N²-{2-methyl-4-[1,2,2,2-tetrafluor-1-(trifluormethyl)ethyl]phenyl}-N¹-(1-methyl-2-{[(trimethylsilyl)methyl]sulfanyl}ethyl)phthalamid

- Ausbeute:: 0.12g (15% d. Th.)
- Fp.:: 159-160°C
- HPLC:: Log P (pH 2.3) = 5.38
- ¹H-NMR (CD₃CN):δ: = 0 (9H), 1.15 (d, 3H), 1.74 (m, 2H), 2.32 (s, 3H), 2.55 (m, 1H), 2.65 (m, 1H), 4.14 (m, 1H), 6.85 (m, 1H), 7.55 (m, 5H), 8.05 (m, 1H), 8.30 (m, 1H) ppm.

### Isomer 2:

3-Chlor-N¹-{2-methyl-4-[1,2,2,2-tetrafluor-1-(trifluoromethyl)ethyl]phenyl}-N²-(1-methyl-2- {[(trimethylsilyl)methyl]sulfanyl}ethyl)phthalamid
- Ausbeute:: 0.20g (27% d. Th.)
- Fp.:: 161-162°C
- HPLC:: Log P (pH 2.3) = 5.56
- ¹H-NMR (CD₃CN):δ: = 0 (9H), 1.15 (d, 3H), 1.75 (m, 2H), 2.35 (s, 3H), 2.5 (m, 1H), 2.65 (m, 1H), 4.15 (m, 1H), 6.95 (m, 1H), 7.55 (m, 3H), 7.65 (m, 1H), 7.75 (m, 1H), 8.15 (m, 1H), 8.55 (m, 1H) ppm.

### Beispiel 2

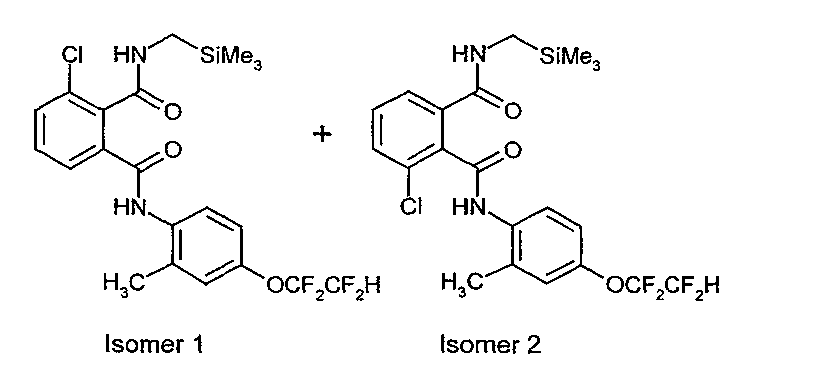

0.50g (1.29 mmol) 4-Chlor-2-[2-methyl-4-(1,1,2,2-tetrafluorethoxy)phenyl]-1H-isoindol-1,3(2H)-dion und 0.38g (3.65 mmol) Trimethylsilylmethylamin werden für 16 h unter Rückfluss erhitzt. Das Reaktionsgemisch wird anschließend am unter vermindertem Druck eingeengt und das Rohprodukt mit Diisopropylether verrührt.

### Isomerengemisch

3-Chlor-N¹-[2-methyl-4-(1,1,2,2-tetrafluorethoxy)phenyl]-N²-[(trimethylsilyl)methyl]phthalamid (Isomer 1) und 3-Chlor-N²-[2-methyl-4-(1,1,2,2-tetrafluorethoxy)-phenyl]-N¹-[(trimethylsilyl)methyl]phthalamid (Isomer 2)
- Ausbeute:: 0.55g (56% d.Th.)
- HPLC:: Log P (pH 2.3) = 3.59 und 3.69
- ¹H-NMR(CD₃CN):δ: = 0.1 (9H), 2.25 (s,3H), 2.75 (s,2H), 6.12 (m,1H), 6.7-8.5 (m, 8H) ppm.

### Beispiel 3

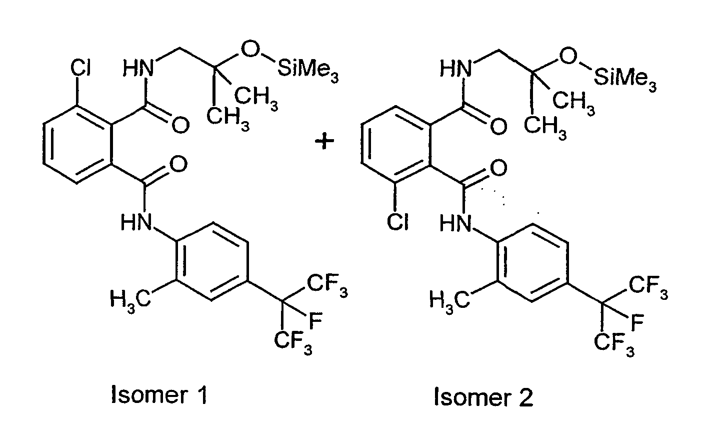

0.80g (1.819 mmol) 4-Chlor-2-{2-methyl-4-[1,2,2,2-tetrafluor-1-(trifluoromethyl)-ethyl]phenyl}-1H-isoindol-1,3(2H)-dion und 0.587g (3.639 mmol) 2-Methyl-2-[(trimethylsilyl)oxy]-1-propanamin werden 1 h ohne Lösungsmittel bei 100°C verrührt. Das Rohprodukt wird anschließend durch Säulenchromatographie an Kieselgel (Eluent: Dichlormethan) gereinigt.

### Isomer 1:

3-Chlor-N¹-{2-methyl-4-[1,2,2,2-tetrafluor-1-(trifluormethyl)ethyl]phenyl}-N²-{2-methyl-2-[(trimethylsilyl)oxy]propyl}phthalamid
- Ausbeute:: 0.42g (23% d. Th.)
- Fp.:: 144-145°C
- HPLC:: Log P (pH 2.3) = 3.11
- ¹H-NMR (CD₃CN):: δ = 0 (9H), 1.15 (s, 6H), 2.3 (s, 3H), 3.2 (m, 2H), 6.70 - 8.50 (m, 8H).

### Isomer 2:

3-Chlor-N²-{2-methyl-4-[1,2,2,2-tetrafluor-1-(trifluormethyl)ethyl]phenyl}-N¹-{2-methyl-2-[(trimethylsilyl)oxy]propyl}phthalamid
- Ausbeute:: 0.27g (22% d. Th.)
- Fp.:: 163-164°C
- HPLC:: Log P (pH 2.3) = 3.19
- ¹H-NMR (CD₃CN):δ: = 0 (9H), 1.1 (s, 3H), 1.15 (s, 3H), 2.3 (s, 3H), 3.25 (m, 2H), 6.95 (m, 1H), 7.45 (m, 3H), 7.60 (m, 2H), 7.95 (m, 1H), 8.35 (m, 1H) ppm.

Entsprechend einem der Beispiele 1 bis 3 können folgende Verbindungen erhalten werden:

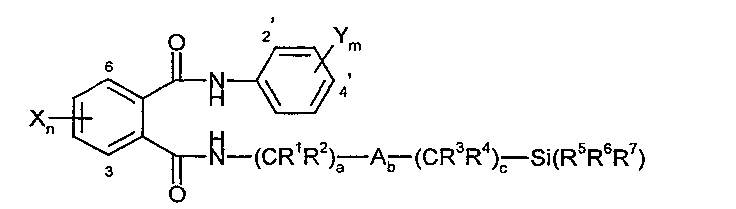

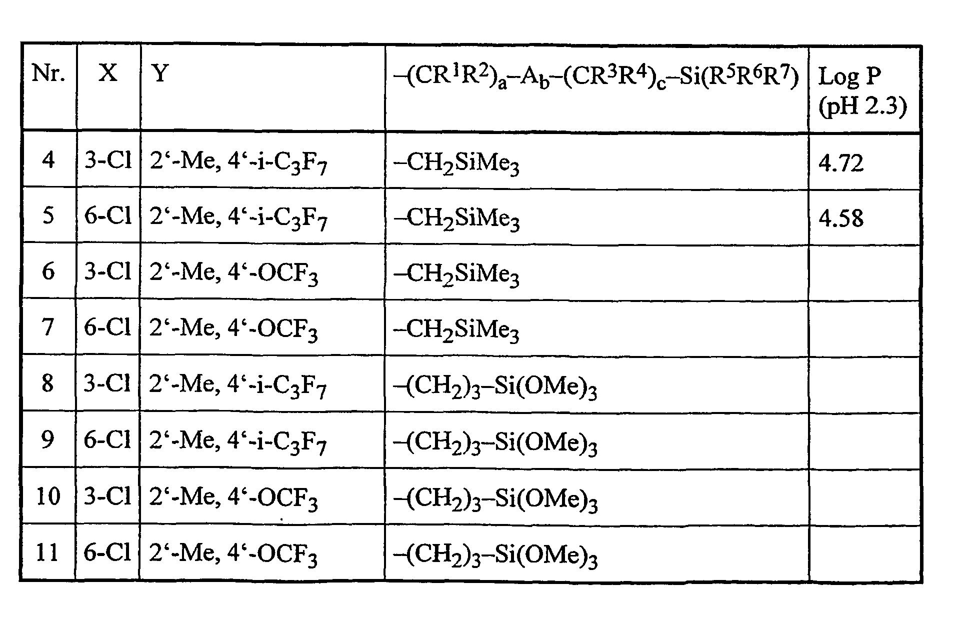

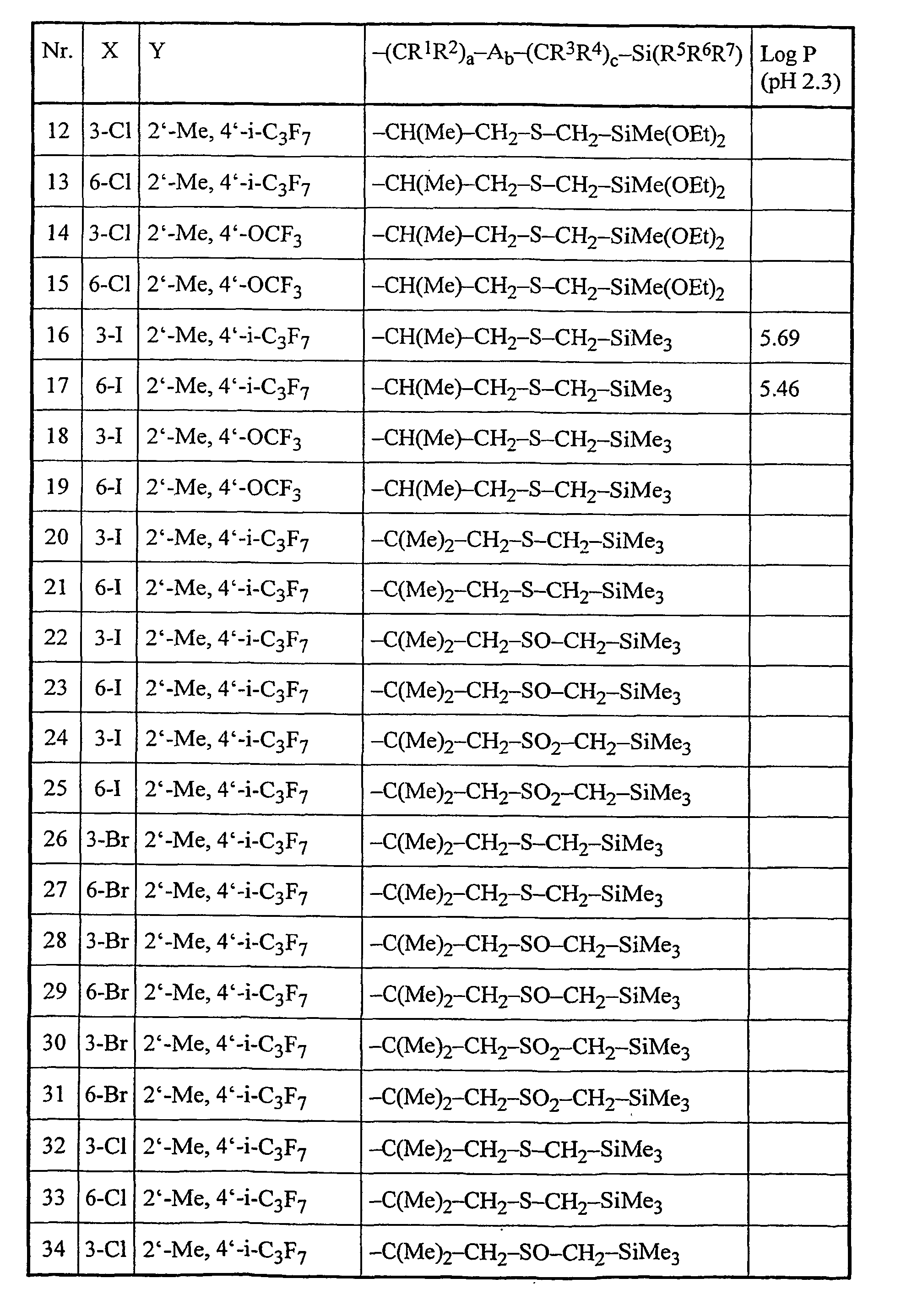

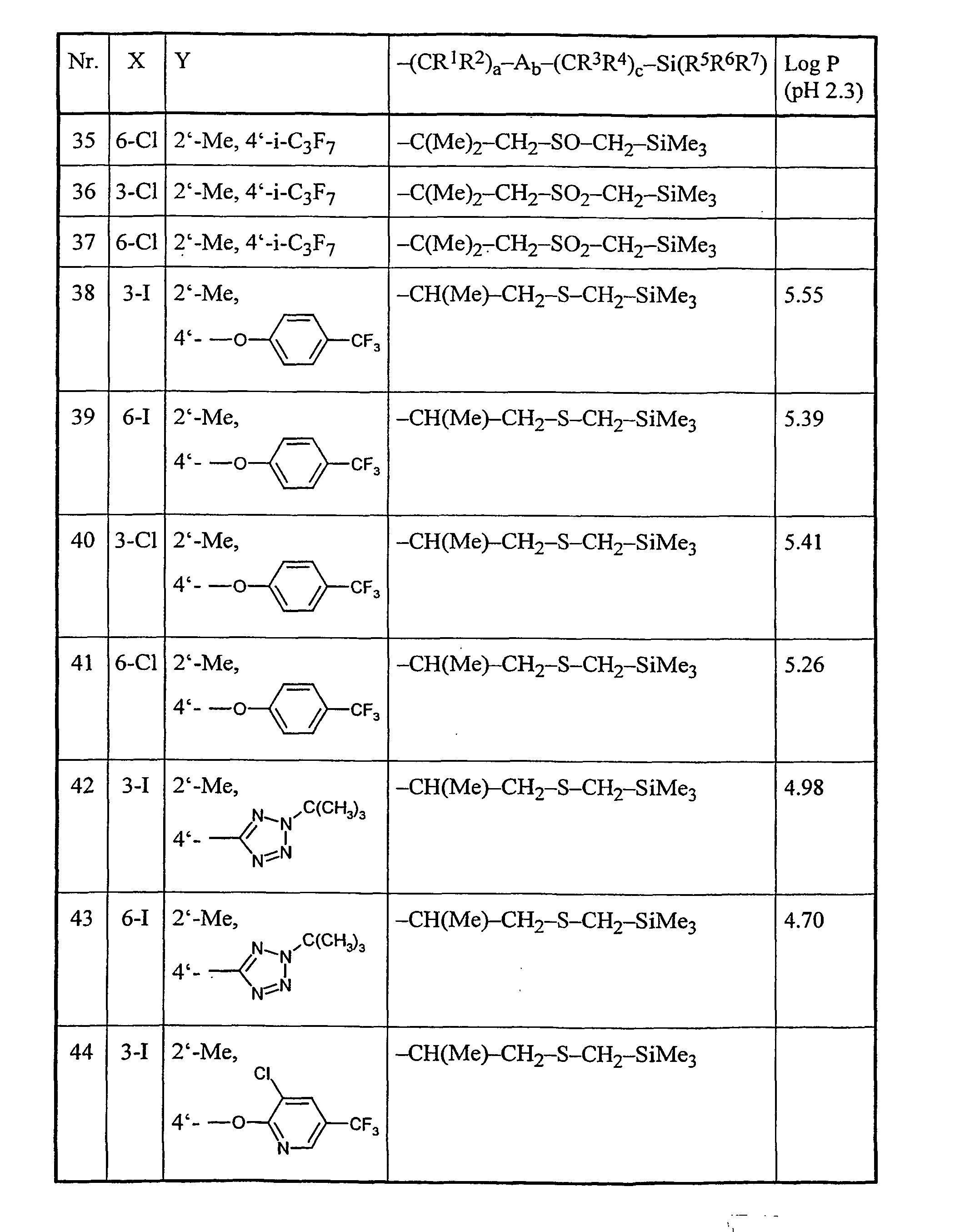

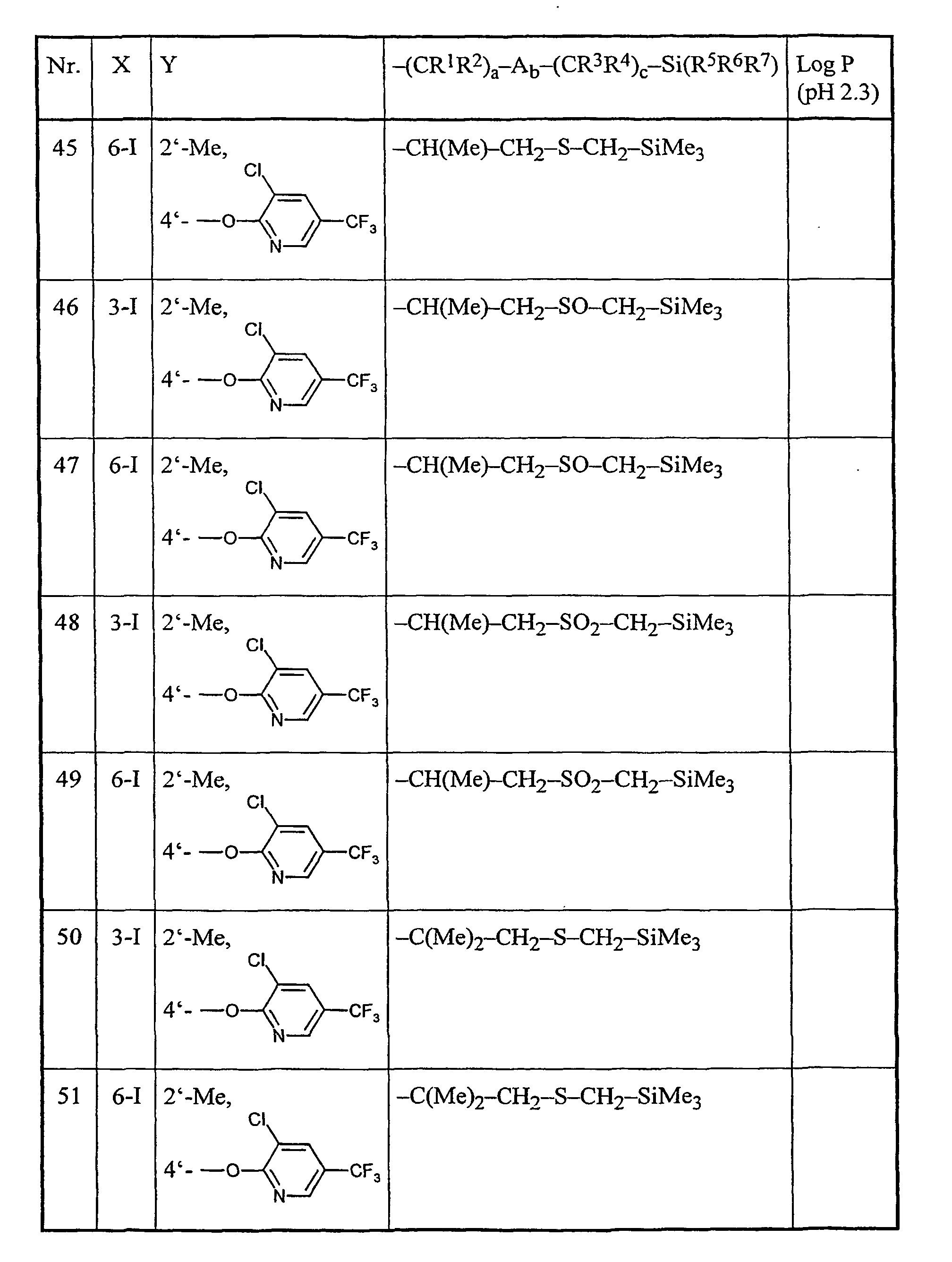

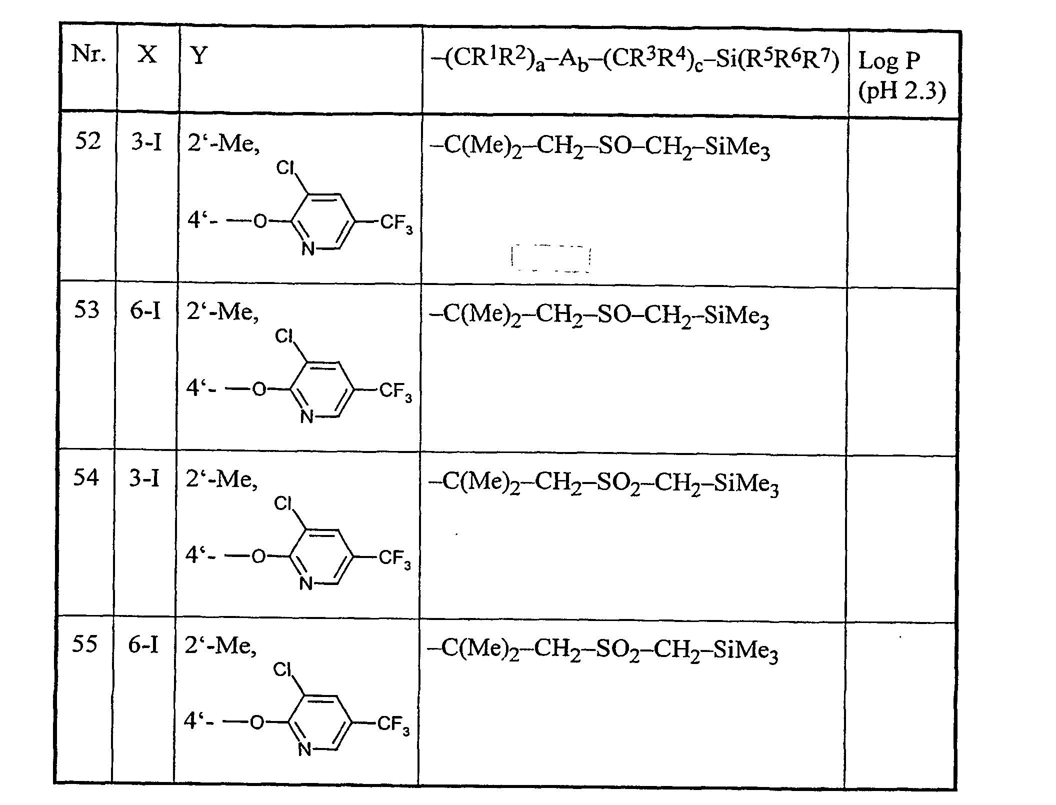

### Herstellung der Ausgangsstoffe:

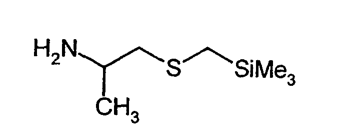

1.66g (13.8 mmol) Trimethylsilylmethanthiol werden in 20 ml Methanol bei 0°C vorgelegt. Man tropft 0.788g (13.8 mmol) 2-Methylaziridin zu, rührt für 4 h bei 0°C weiter und erhitzt anschließend für 8 h unter Rückfluss, worauf das Reaktionsgemisch unter vermindertem Druck eingeengt wird.
- Ausbeute:: 1.84g (48% d. Th.) an 1-{[(Trimethylsilyl)methyl]sulfanyl}-2-propanamin als Öl
- HPLC:: Log P (pH 2.3) = 1.28
- ¹H-NMR (CD₃CN):δ: = 0.05 (9H), 1.15 (d, 3H), 1.75 (q, 2H), 2.50 (m, 2H), 2.85 (br, 2H), 3.10 (m, 1H) ppm.

Die Bestimmung der angegebenen logP-Werte erfolgte gemäß EEC-Directive 79/831 Annex V.A8 durch HPLC (High Performance Liquid Chromatography) an einer Phasenumkehrsäule (C 18). Temperatur: 43°C.

Die Bestimmung erfolgt im sauren Bereich bei pH 2.3 mit 0,1 % wässriger Phosphorsäure und Acetonitril als Eluenten; linearer Gradient von 10 % Acetonitril bis 90 % Acetonitril.

Die Eichung erfolgte mit unverzweigten Alkan-2-onen (mit 3 bis 16 Kohlenstoffatomen), deren logP-Werte bekannt sind (Bestimmung der logP-Werte anhand der Retentionszeiten durch lineare Interpolation zwischen zwei aufeinanderfolgenden Alkanonen).

Die lambda-max-Werte wurden an Hand der UV-Spektren von 200 nm bis 400 nm in den Maxima der chromatographischen Signale ermittelt.

### Anwendungsbeispiele

### Beispiel A

### Heliothis virescens-Test

- Lösungsmittel:: 7 Gewichtsteile Dimethylformamid
- Emulgator:: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Sojatriebe (Glycine max) werden durch Tauchen in die Wirkstoffzubereitung der gewünschten Konzentration behandelt und mit Heliothis virescens-Raupen besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigen z. B. die folgenden Verbindungen der Herstellungsbeispiele gute Wirksamkeit:

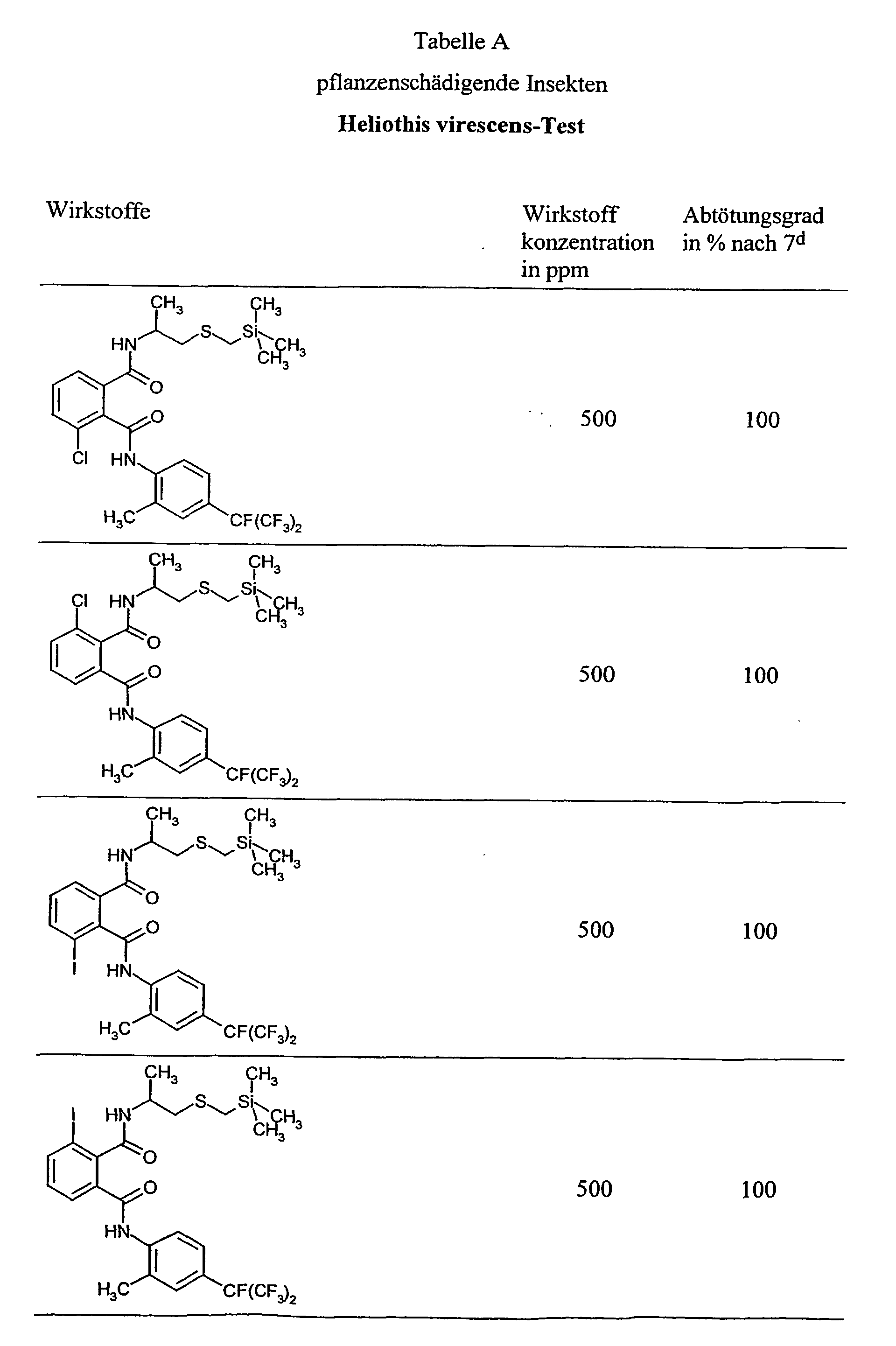

### Beispiel B

### Phaedon-Larven-Test

- Lösungsmittel:: 7 Gewichtsteile Dimethylformamid
- Emulgator:: 2 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Larven des Meerrettichblattkäfers (Phaedon cochleariae) besetzt, solange die Blätter noch feucht sind.

Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden.

Bei diesem Test zeigen z. B. die folgenden Verbindungen der Herstellungsbeispiele gute Wirksamkeit:

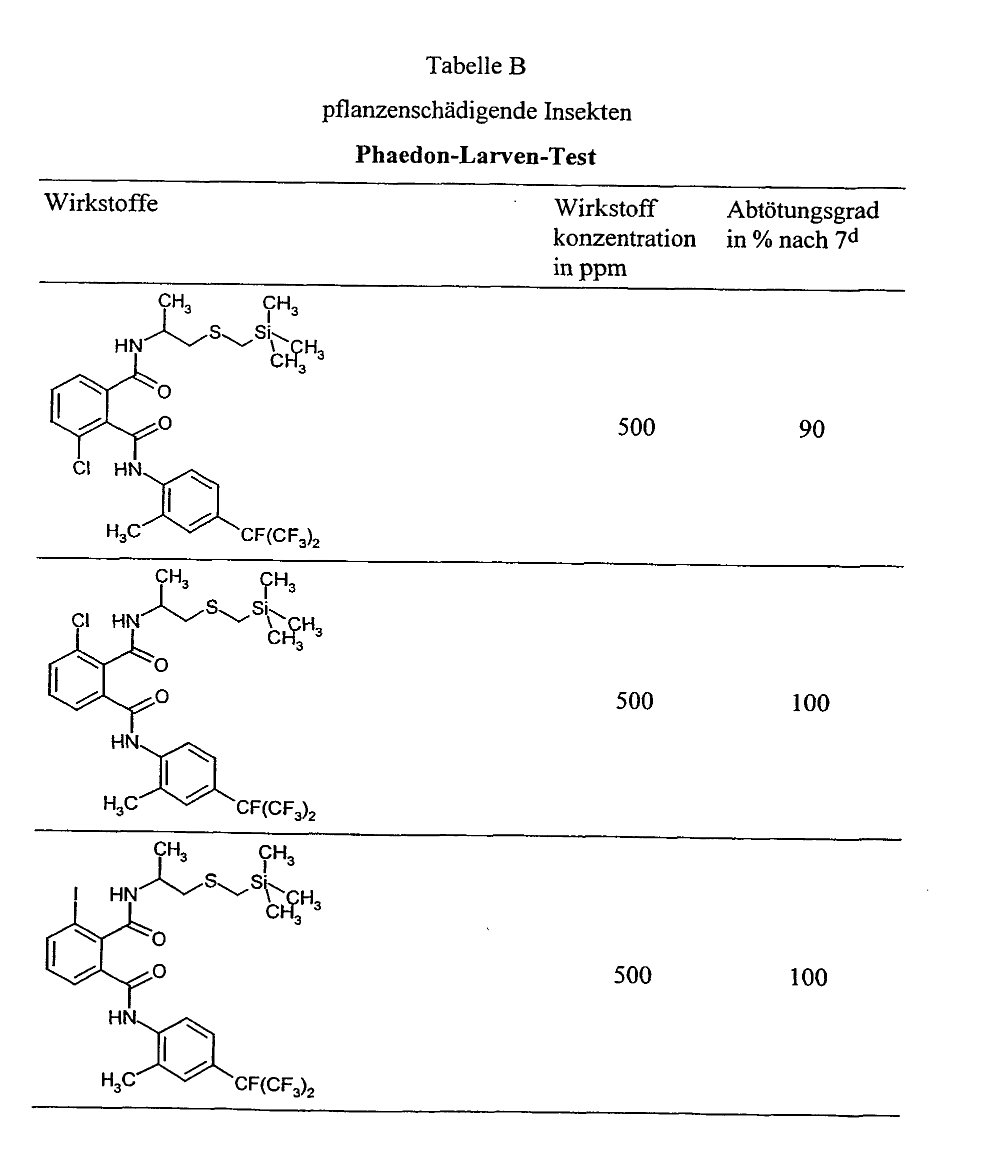

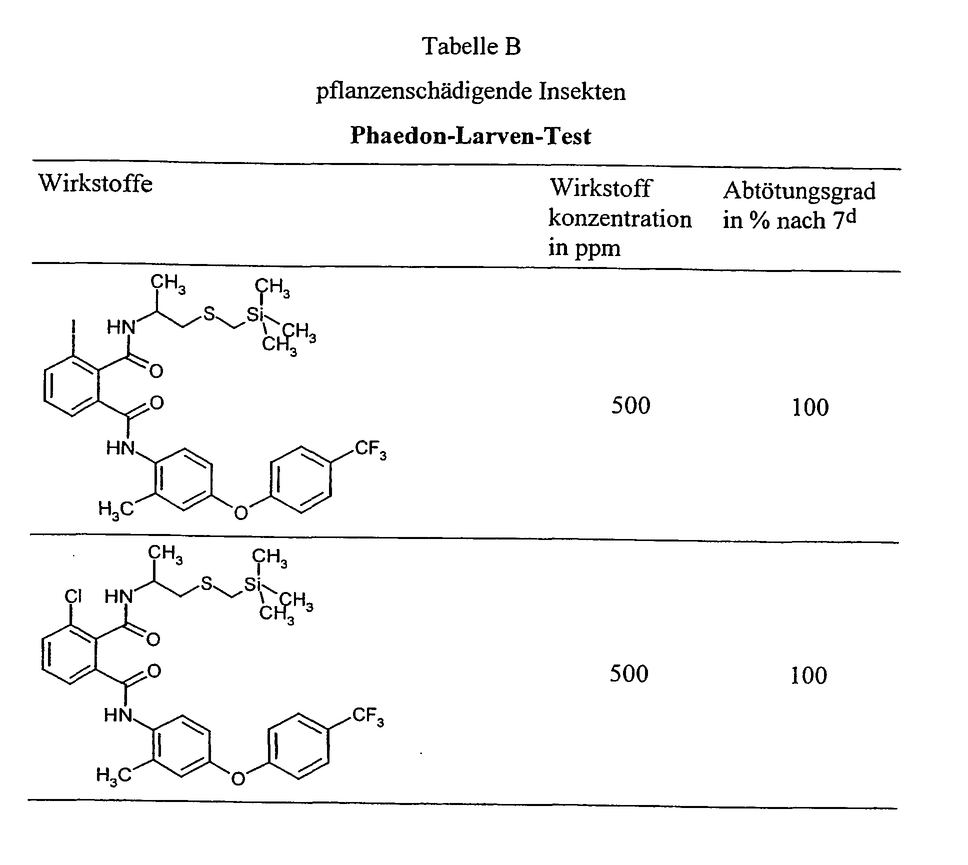

### Beispiel C

### Plutella-Test, sensibler Stamm

- Lösungsmittel:: 7 Gewichtsteile Dimethylformamid
- Emulgator:: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella xylostella, sensibler Stamm) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigen z. B. die folgenden Verbindungen der Herstellungsbeispiele gute Wirksamkeit:

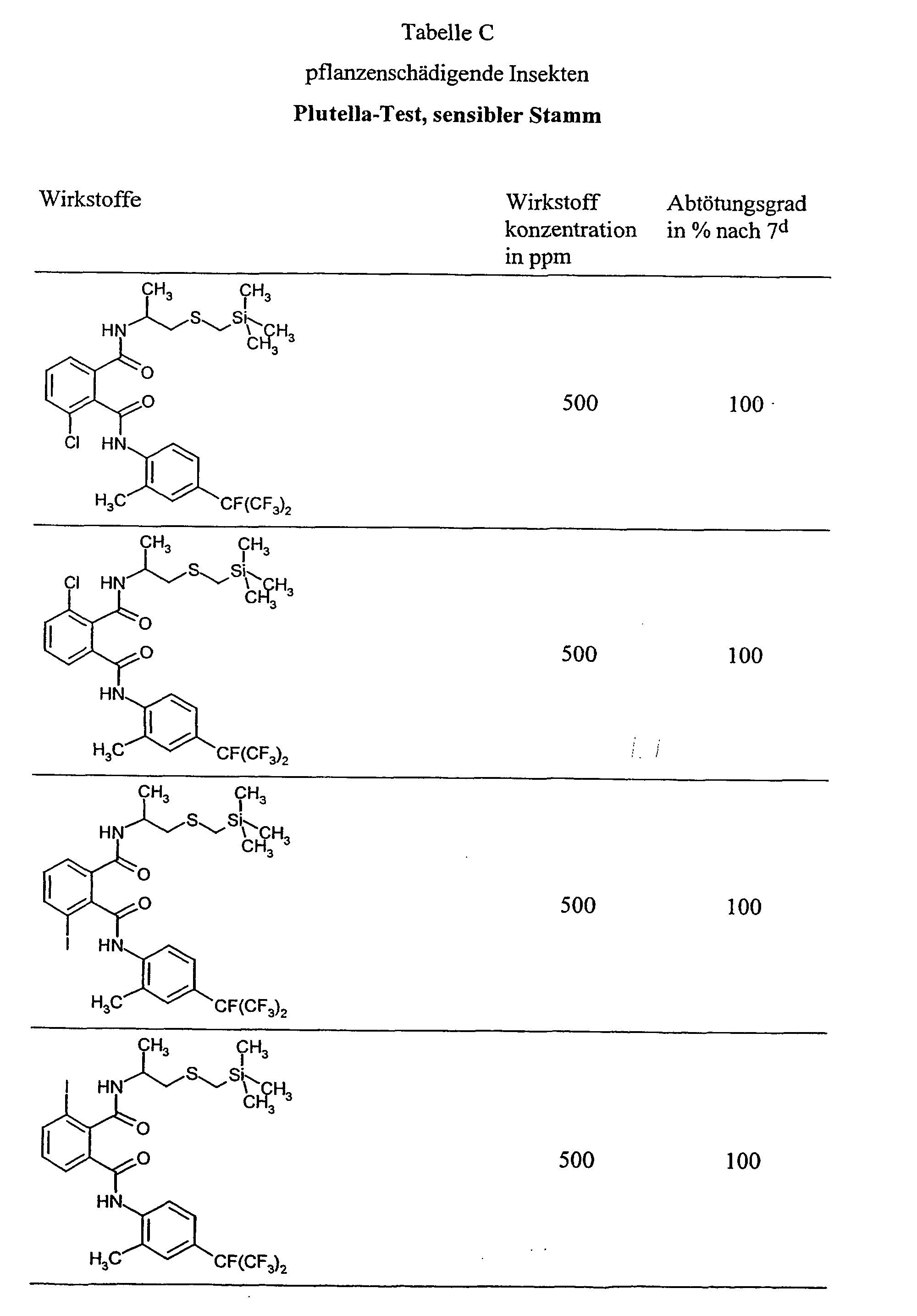

### Beispiel D

### Plutella-Test, resistenter Stamm

- Lösungsmittel:: 7 Gewichtsteile Dimethylformamid
- Emulgator:: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella xylostella, resistenter Stamm) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigen z. B. die folgenden Verbindungen der Herstellungsbeispiele gute Wirksamkeit:

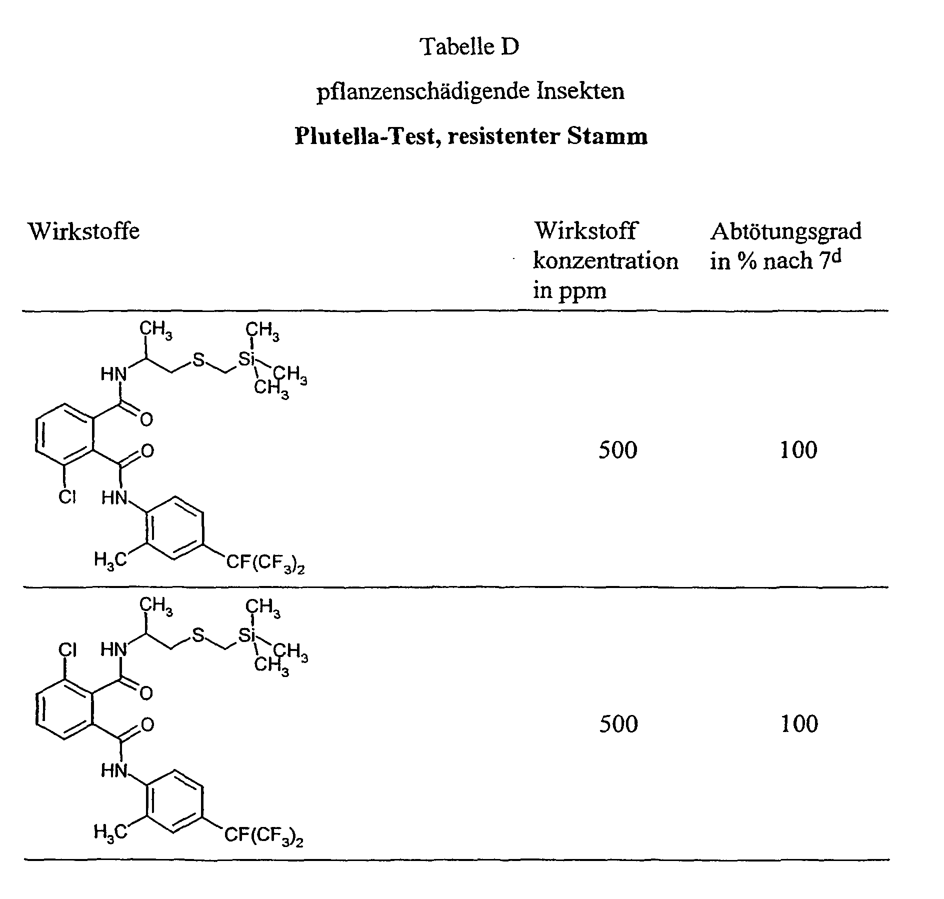

### Beispiel E

### Spodoptera exigua-Test

- Lösungsmittel:: 7 Gewichtsteile Dimethylformamid
- Emulgator:: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen des Hcerwurms (Spodoptera exigua) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigen z. B. die folgenden Verbindungen der Herstellungsbeispiele gute Wirksamkeit:

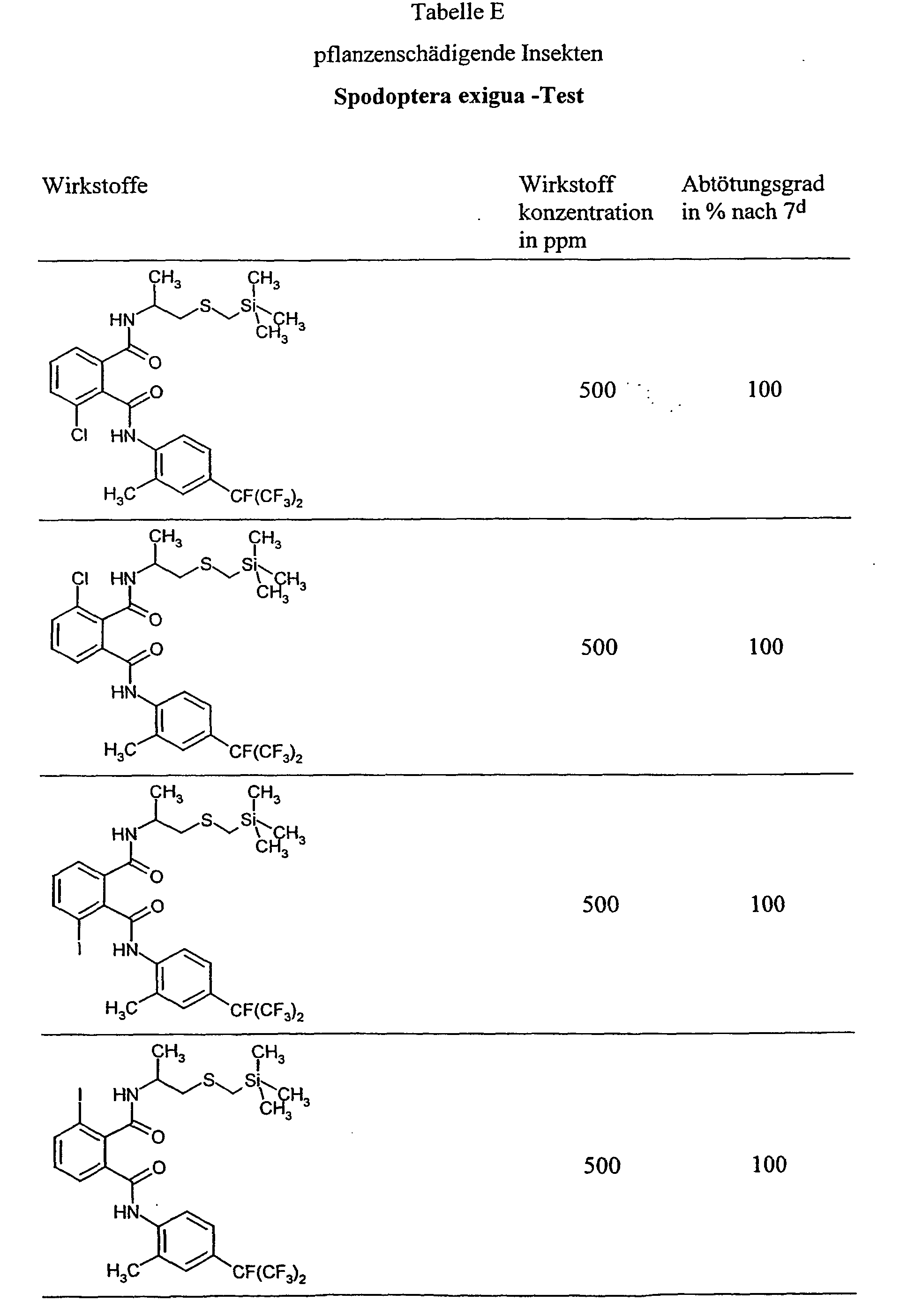

### Beispiel F

### Spodoptera frugiperda-Test

- Lösungsmittel:: 7 Gewichtsteile Dimethylformamid
- Emulgator:: 2 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Tauchen in die Wirkstoffzubereitung der gewünschten Konzentration behandelt und mit Raupen des Heerwurms (Spodoptera frugiperda) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

Bei diesem Test zeigen z. B. die folgenden Verbindungen der Herstellungsbeispiele gute Wirksamkeit:

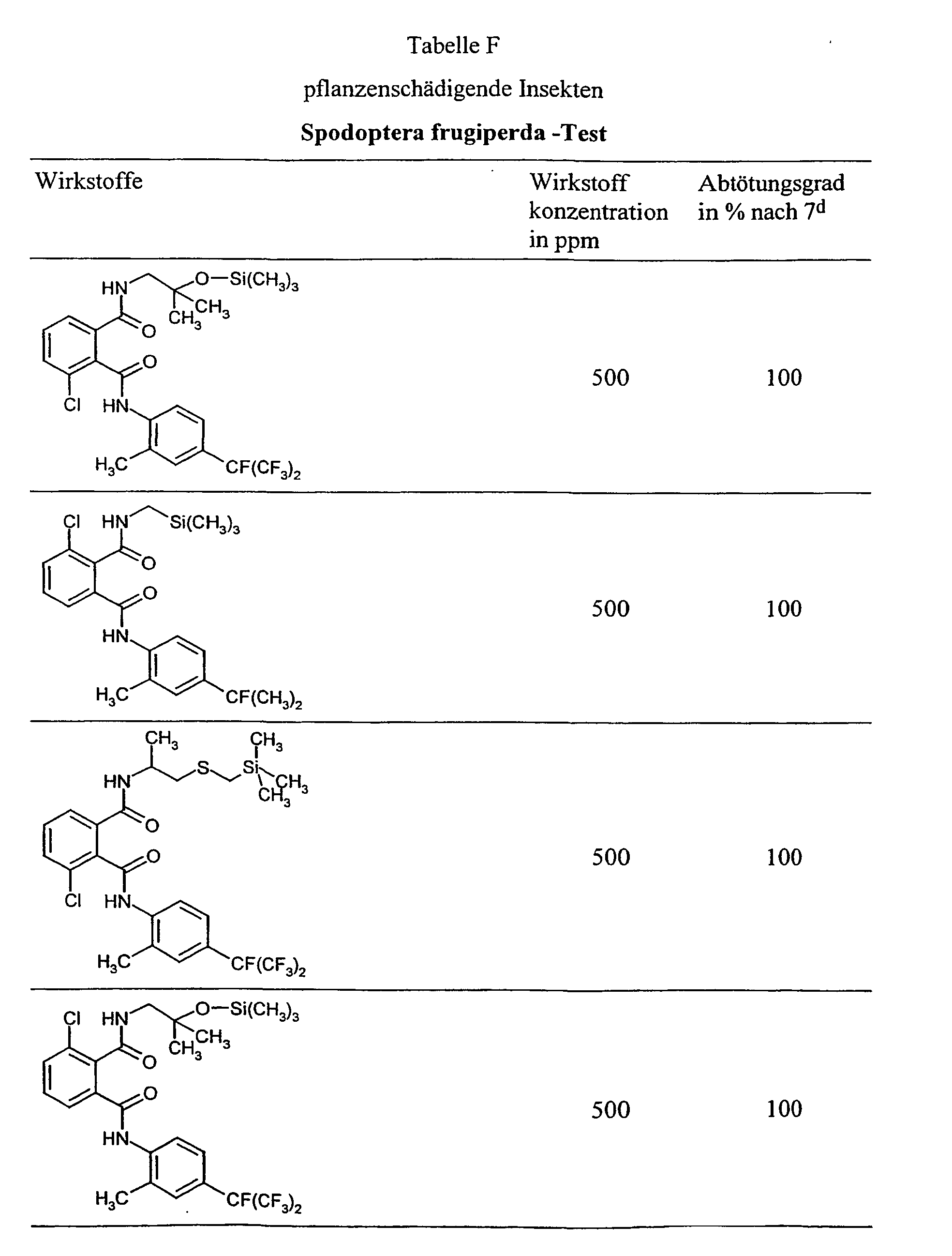

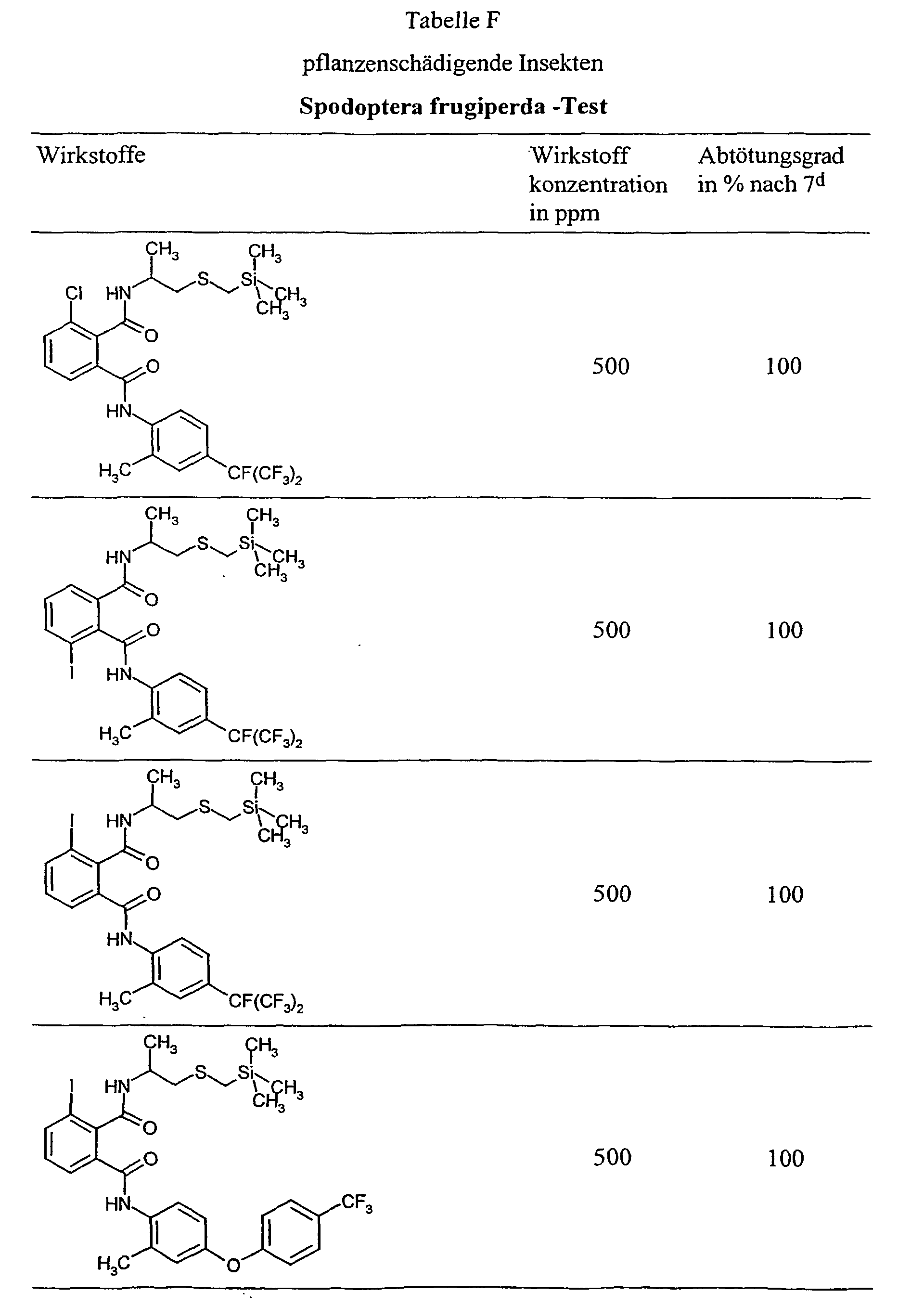

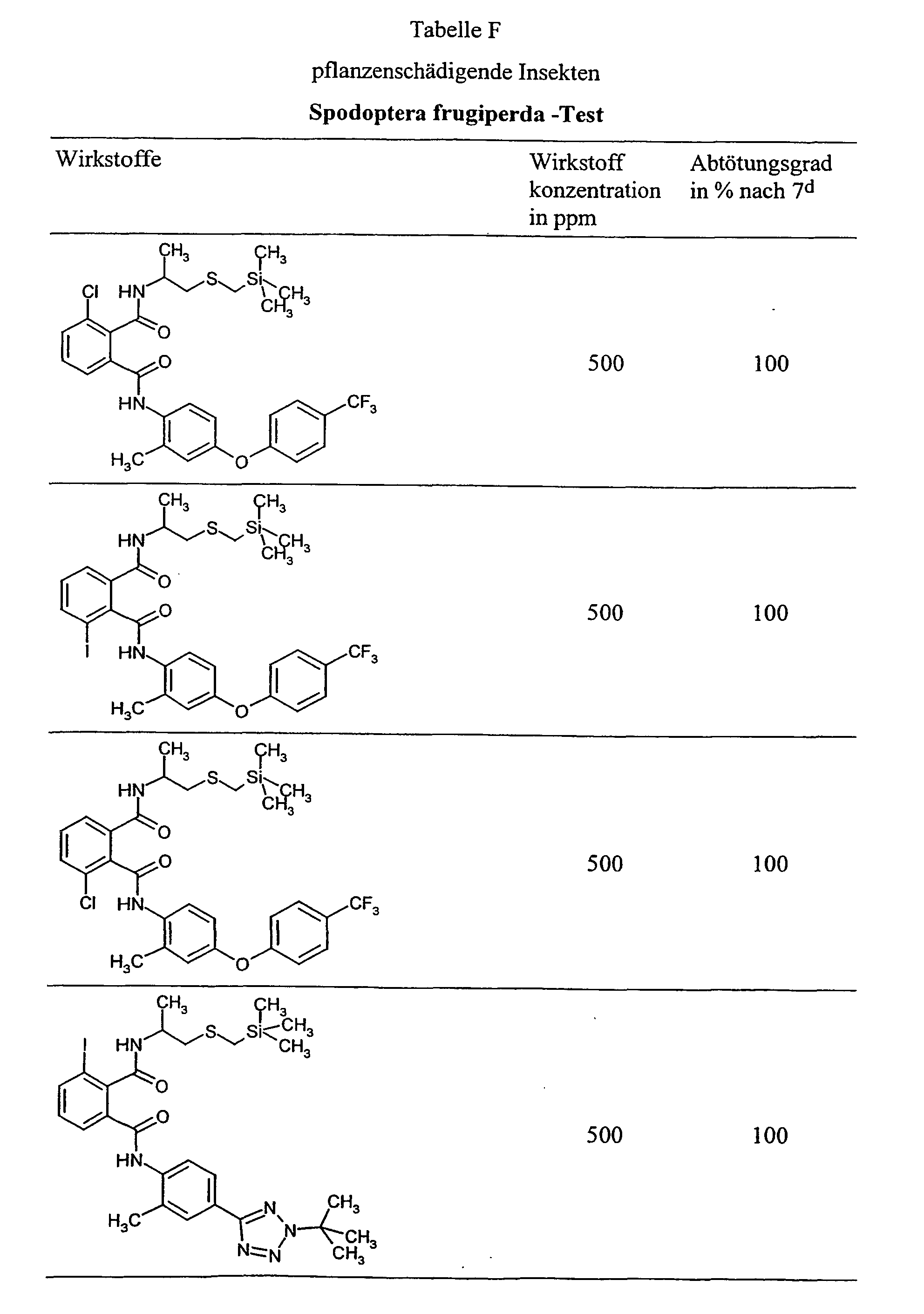

### Beispiel G

### Diabrotica balteata - Test (Larven im Boden)

Grenzkonzentrations-Test / Bodeninsekten - Behandlung transgener Pflanzen
- Lösungsmittel:: 7 Gewichtsteile Dimethylformamid
- Emulgator:: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird auf den Boden gegossen. Dabei spielt die Konzentration des Wirkstoffs in der Zubereitung praktisch keine Rolle, entscheidend ist allein die Wirkstoffgewichtsmenge pro Volumeneinheit Boden, welche in ppm (mg/l) angegeben wird. Man füllt den Boden in 0,25 1 Töpfe und lässt diese bei 20°C stehen.

Sofort nach dem Ansatz werden je Topf 5 vorgekeimte Maiskörner der Sorte YIELD GUARD (Warenzeichen von Monsanto Comp., USA) gelegt. Nach 2 Tagen werden in den behandelten Boden die entsprechenden Testinsekten gesetzt. Nach weiteren 7 Tagen wird der Wirkungsgrad des Wirkstoffs durch Auszählen der aufgelaufenen Maispflanzen bestimmt (1 Pflanze = 20 % Wirkung).

### Beispiel H

### Heliothis virescens - Test (Behandlung transgener Pflanzen)

- Lösungsmittel:: 7 Gewichtsteile Dimethylformamid
- Emulgator:: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Sojatriebe (Glycine max) der Sorte Roundup Ready (Warenzeichen der Monsanto Comp. USA) werden durch Tauchen in die Wirkstoffzubereitung der gewünschten Konzentration behandelt und mit der Tabakknospenraupe Heliothis virescens besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden.

## Patentansprüche

1. Phthalsäurediamide der Formel (I) 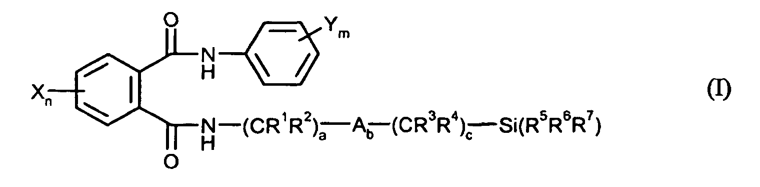 in welcher
X für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl oder Phenoxy steht,
X außerdem für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl oder Phenoxy steht,
Y für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, steht,
Y außerdem für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, steht,
n für 1, 2 oder 3 steht,
m für 1, 2, 3 oder 4 steht,
R¹, R², R³ und R⁴ unabhängig voneinander für Wasserstoff, C₁-C₆-Alkyl, C₁-C₆-Halogenalkyl oder C₃-C₆-Cycloalkyl stehen,
R⁵, R⁶ und R⁷ unabhängig voneinander für C₁-C₆-Alkyl oder C₁-C₆-Alkoxy stehen,
A für -S(O)_{d}- oder Sauerstoff steht,
a für 1, 2, 3 oder 4 steht mit der Maßgabe, dass die Wiederholungseinheit -CR¹R²-gleiche oder verschiedene Bedeutungen haben kann, wenn a für 2, 3 oder 4 steht,
b für 0 oder 1 steht,
c für 0, 1, 2, 3 oder 4 steht mit der Maßgabe, dass die Wiederholungseinheit -CR³R⁴-gleiche oder verschiedene Bedeutungen haben kann, wenn c für 2, 3 oder 4 steht,
d für 0, 1 oder 2 steht.

2. Phthalsäurediamide der Formel (I) gemäß Anspruch 1, in welcher
X für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl oder Phenoxy steht,
Y für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, steht,
n, m, R¹, R², R³, R⁴, R⁵, R⁶, R⁷, A, a, b, c und d die in Anspruch 2 angegebenen Bedeutungen haben.

3. Phthalsäurediamide der Formel (I) gemäß Anspruch 1, in welcher
X für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht,
Y für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht,
Y außerdem für jeweils gegebenenfalls einfach bis vierfach, gleich oder verschieden durch Fluor, Chlor, Brom, Iod, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₁-C₄-Alkylthio, C₁-C₄-Halogenalkylthio mit 1 bis 9 Fluor-, Chlor- und/oder Bromatomen substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten steht,
n für 1 oder 2 steht,
m für 1, 2 oder 3 steht,
R¹, R², R³ und R⁴ unabhängig voneinander für Wasserstoff, C₁-C₄-Alkyl, C₁-C₄-Halogenalkyl mit 1 bis 9 Fluor-, Chlor- und/oder Bromatomen oder C₃-C₆-Cycloalkyl stehen,
R⁵, R⁶ und R⁷ unabhängig voneinander für C₁-C₃-Alkyl oder C₁-C₃-Alkoxy stehen,
A für -S(O)_{d}- oder Sauerstoff steht,
a für 1, 2 oder 3 steht mit der Maßgabe, dass die Wiederholungseinheit -CR¹R²-gleiche oder verschiedene Bedeutungen haben kann, wenn a für 2 oder 3 steht,
b für 0 oder 1 steht,
c für 0, 1, 2 oder 3 steht mit der Maßgabe, dass die Wiederholungseinheit -CR³R⁴-gleiche oder verschiedene Bedeutungen haben kann, wenn c für 2 oder 3 steht,
d für 0, 1 oder 2 steht.

4. Phthalsäurediamide der Formel (I) gemäß Anspruch 3, in welcher
X für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht,
Y für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht, und
n, m, R¹, R², R³, R⁴, R⁵, R⁶, R⁷, A, a, b, c und d die in Anspruch 3 angegebenen Bedeutungen haben.

5. Phthalsäurediamide der Formel (I) gemäß Anspruch 1, in welcher
X für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht,
Y für Wasserstoff, Fluor, Chlor, Brom, Iod, Cyano, Nitro, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₃-C₆-Cycloalkyl, -S(O)_{d}-C₁-C₄-alkyl, -S(O)_{d}-C₁-C₄-halogenalkyl mit 1 bis 9 Fluor-, Chlor- und/oder Bromatomen steht,
Y außerdem für jeweils gegebenenfalls einfach bis vierfach, gleich oder verschieden durch Fluor, Chlor, Brom, Iod, C₁-C₄-Alkyl, C₁-C₄-Halogenalkyl mit 1 bis 9 Fluor-, Chlor- und/oder Bromatomen, C₁-C₄-Alkoxy, C₁-C₄-Halogenalkoxy mit 1 bis 9 Fluor-, Chlor- und/oder Bromatomen, C₁-C₄-Alkylthio, C₁-C₄-Halogenalkylthio mit 1 bis 9 Fluor-, Chlor- und/oder Bromatomen substituiertes Phenyl, Phenoxy, Furyl, Furyloxy, Thienyl, Thienyloxy, Pyrrolyl, Pyrrolyloxy, Tetrazolyl, Pyridyl, Pyridyloxy, Pyrimidinyl, Pyrimidinyloxy, Pyridazinyl, Pyridazinyloxy, Pyrazinyl oder Pyrazinyloxy steht,
n für 1 oder 2 steht,
m für 1, 2 oder 3 steht,
R¹, R², R³ und R⁴ unabhängig voneinander für Wasserstoff, C₁-C₄-Alkyl, C₁-C₄-Halogenalkyl mit 1 bis 9 Fluor-, Chlor- und/oder Bromatomen oder C₃-C₆-Cycloalkyl stehen,
R⁵, R⁶ und R⁷ unabhängig voneinander für C₁-C₃-Alkyl oder C₁-C₃-Alkoxy stehen,
A für -S(O)_{d}- oder Sauerstoff steht,
a für 1, 2 oder 3 steht mit der Maßgabe, dass die Wiederholungseinheit -CR¹R²-gleiche oder verschiedene Bedeutungen haben kann, wenn a für 2 oder 3 steht,
b für 0 oder 1 steht,
c für 0, 1, 2 oder 3 steht mit der Maßgabe, dass die Wiederholungseinheit -CR³R⁴-gleiche oder verschiedene Bedeutungen haben kann, wenn c für 2 oder 3 steht,
d für 0, 1 oder 2 steht.

6. Phthalsäurediamide der Formel (I) gemäß Anspruch 1, in welcher
X für Chlor, Brom, Iod steht,
Y für Methyl, Ethyl, n-Propyl, i-Propyl, Trifluormethyl, Pentafluorethyl, n-Heptafluorpropyl, i-Heptafluorpropyl, Trifluormethoxy oder -OCF₂CF₂H steht,
Y außerdem für jeweils gegebenenfalls einfach bis dreifach, gleich oder verschieden durch Fluor, Chlor, Brom, Iod, Methyl, Ethyl, n-Propyl, i-Propyl, n-Butyl, i-Butyl, s-Butyl, t-Butyl, -CF₃, -CHF₂, -CClF₂, -CF₂CHFCl, -CF₂CH₂F, -CF₂CCl₃, -CH₂CF₃, -CF₂CHFCF₃, -CH₂CF₂H, -CH₂CF₂CF₃, -CF₂CF₂H, -CF₂CHFCF₃, -OCF₃, -OCHF₂, -OCF₂CF₂H, -SCF₃, -SCHF₂ substituiertes Phenoxy, Pyridinyloxy oder Tetrazolyl steht,
n für 1 steht,
m für 2 steht,
R¹, R², R³ und R⁴ unabhängig voneinander für Wasserstoff, Methyl oder Ethyl stehen,
R⁵, R⁶ und R⁷ unabhängig voneinander für Methyl, Ethyl, Methoxy oder Ethoxy stehen,
A für -S(O)_{d}- oder Sauerstoff steht,
a für 1, 2 oder 3 steht mit der Maßgabe, dass die Wiederholungseinheit -CR¹R²-gleiche oder verschiedene Bedeutungen haben kann, wenn a für 2 oder 3 steht,
b für 0 oder 1 steht,
c für 0, 1 oder 2 steht mit der Maßgabe, dass die Wiederholungseinheit -CR³R⁴-gleiche oder verschiedene Bedeutungen haben kann, wenn c für 2 steht,
d für 0, 1 oder 2 steht.

7. Phthalsäurediamide der Formel (I) gemäß Anspruch 6, in welcher
Y für Methyl, Ethyl, n-Propyl, i-Propyl, Trifluormethyl, Pentafluorethyl, n-Heptafluorpropyl, 1-Heptafluorpropyl, Trifluormethoxy oder -OCF₂CF₂H steht, und
X, n, m, R¹, R², R³, R⁴, R⁵, R⁶, R⁷, A, a, b, c und d die in Anspruch 6 angegebenen Bedeutungen haben.

8. Phthalsäurediamide der Formel (I-a) 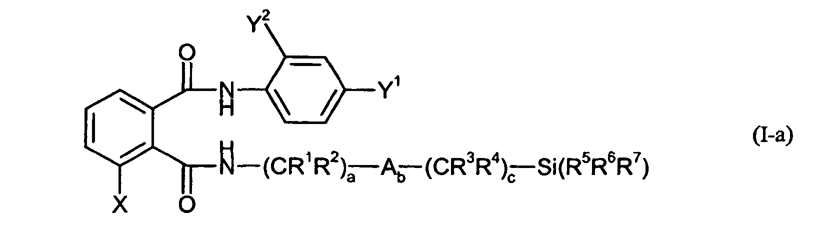 in welcher
Y¹ und Y² unabhängig voneinander für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, stehen,
Y¹ und Y² außerdem unabhängig voneinander für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, stehen,
A für Schwefel oder Sauerstoff steht,
b für 0 oder 1 steht,
X, R¹, R², R³, R⁴, R⁵, R⁶, R⁷, a und c die in einem der Ansprüche 1 bis 7 angegebenen Bedeutungen haben.

9. Phthalsäurediamide der Formel (I-b) 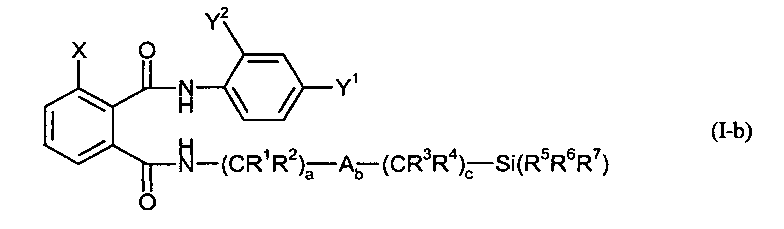 in welcher
Y¹ und Y² unabhängig voneinander für Wasserstoff, Halogen, Cyano, Nitro, C₁-C₆-Alkyl, C₁-C₆-Halogenalkyl, C₁-C₆-Alkoxy, C₁-C₆-Halogenalkoxy, C₃-C₆-Cycloalkyl, C₃-C₆-Halogencycloalkyl, C₃-C₆-Cycloalkyloxy, C₃-C₆-Halogencycloalkyloxy, -S(O)_{d}-C₁-C₆-alkyl, -S(O)_{d}-C₁-C₆-halogenalkyl oder für jeweils gegebenenfalls einfach bis vierfach, gleich oder verschieden durch Halogen, C₁-C₆-Alkyl, C₁-C₆-Halogenalkyl substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, stehen,
Y¹ und Y² außerdem unabhängig voneinander für jeweils gegebenenfalls einfach bis vierfach, gleich oder verschieden durch C₁-C₆-Alkoxy, C₁-C₆-Halogenalkoxy, C₁-C₆-Alkylthio, C₁-C₆-Halogenalkylthio substituiertes Phenyl, Phenoxy, 5- oder 6-gliedriges Heteroaryl oder Heteroaryloxy mit 1 bis 4 Heteroatomen, welche 0 bis 4 Stickstoffatome, 0 bis 2 nicht benachbarte Sauerstoffatome und/ oder 0 bis 2 nicht benachbarte Schwefelatome enthalten, stehen,
A für Schwefel oder Sauerstoff steht,
b für 0 oder 1 steht und
X, R¹, R², R³, R⁴, R⁵, R⁶, R⁷, a und c die in einem der Ansprüche 1 bis 7 angegebenen Bedeutungen haben.

10. Phthalsäurediamide der Formel (I) gemäß Anspruch 8, in welcher A für SO oder SO₂ steht.

11. Phthalsäurediamide der Formel (I) gemäß Anspruch 9, in welcher A für SO oder SO₂ steht.

12. Phthalsäurediamide der Formel (I) gemäß Anspruch 8, in welcher Y' für Trifluormethyl, Pentafluorethyl, n-Heptafluorpropyl oder i-Heptafluorpropyl steht.

13. Phthalsäurediamide der Formel (I) gemäß Anspruch 9, in welcher Y¹ für Trifluormethyl, Pentafluorethyl, n-Heptafluorpropyl oder i-Heptafluorpropyl steht.

14. Phthalsäurediamide der Formel (I) gemäß Anspruch 8, in welcher Y² für Methyl steht.

15. Phthalsäurediamide der Formel (I) gemäß Anspruch 9, in welcher Y² für Methyl steht.

16. Phthalsäurediamide der Formel (I) gemäß einem der Ansprüche 1 bis 7, in welcher R⁵, R⁶ und R⁷ jeweils für Methyl stehen.

17. Phthalsäurediamide der Formel (I) gemäß einem der Ansprüche 1 bis 7, in welcher A für S, SO oder SO₂ steht.

18. Phthalsäurediamide der Formel (I) gemäß Anspruch 1, ausgewählt aus der Reihe
3-Chlor-N²-{2-methyl-4-[1,2,2,2-tetrafluor-1-(trifluormethyl)ethyl]phenyl}-N¹-(1-methyl-2-{[(trimethylsilyl)methyl]sulfanyl}ethyl)phthalamid,
3-Chlor-N¹-{2-methyl-4-[1,2,2,2-tetrafluor-1-(trifluoromethyl)ethyl]phenyl}-N²-(1-methyl-2-{[(trimethylsilyl)methyl]sulfanyl}ethyl)phthalamid,
3-Chlor-N¹-[2-methyl-4-(1,1,2,2-tetrafluorethoxy)phenyl]-N²-[(trimethylsilyl)methyl]phthalamid,
3-Chlor-N²-[2-methyl-4-(1,1,2,2-tetrafluorethoxy)phenyl]-N¹-[(trimethylsilyl)methyl]phthalamid,
3-Chlor-N¹-{2-methyl-4-[1,2,2,2-tetrafluor-1-(trifluormethyl)ethyl]phenyl}-N²-{2-methyl-2-[(trimethylsilyl)oxy]propyl}phthalamid,
3-Chlor-N²-{2-methyl-4-[1,2,2,2-tetrafluor-1-(trifluormethyl)ethyl]phenyl}-N¹-{2-methyl-2-[(trimethylsilyl)oxy]propyl}phthalamid.

19. Verfahren zur Herstellung von Verbindungen der Formel (I) gemäß Anspruch 1, **dadurch gekennzeichnet, dass** man
Imide der Formel (II) 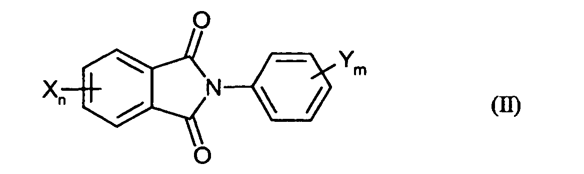 in welcher X, Y, n und m die in Anspruch 1 angegebenen Bedeutungen haben, mit Silylaminen der Formel (III) 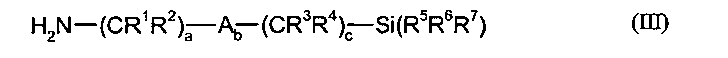 in welcher
R¹, R², R³, R⁴, R⁵, R⁶, R⁷, A, a, b und c die in Anspruch 1 angegebenen Bedeutungen haben, gegebenenfalls in Gegenwart eines Verdünnungsmittels umsetzt.

20. Schädlingsbekämpfungsmittel, **gekennzeichnet durch** einen Gehalt an mindestens einer Verbindung der Formel (I) gemäß Anspruch 1 neben Streckmitteln und/oder oberflächenaktiven Stoffen.

21. Verwendung von Verbindungen der Formel (I) gemäß Anspruch 1 zur Bekämpfung von Schädlingen.

22. Verfahren zur Bekämpfung von Schädlingen, **dadurch gekennzeichnet, dass** man Verbindungen der Formel (I) gemäß Anspruch 1 auf Schädlinge und/oder ihren Lebensraum einwirken lässt.

23. Verfahren zur Herstellung von Schädlingsbekämpfungsmitteln, **dadurch gekennzeichnet, dass** man Verbindungen der Formel (I) gemäß Anspruch 1 mit Streckmitteln und/oder oberflächenaktiven Stoffen vermischt.

## Claims

1. Phthalamides of the formula (I) 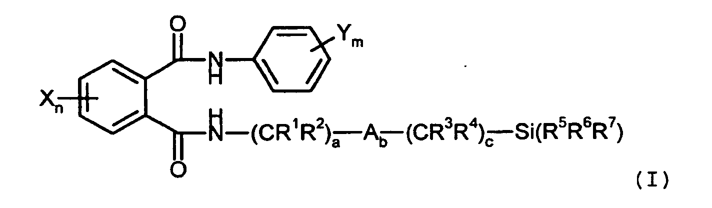 in which
X represents hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S (O)_{d}-C₁-C₆-alkyl, -S(O)_{d}-C₁-C₆-haloalkyl or represents phenyl or phenoxy, each of which is optionally mono- to tetrasubstituted by identical or different substituents from the group consisting of halogen, C₁-C₆-alkyl and C₁-C₆-haloalkyl,
X furthermore represents phenyl or phenoxy, each of which is optionally mono- to tetrasubstituted by identical or different substituents from the group consisting of C₁-C₆-alkoxy, C₁-C₆-haloalkoxy, C₁-C₆-alkylthio and C₁-C₆-haloalkylthio,
Y represents hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S(O)_{d}-C₁-C₆-alkyl, -S(O)_{d}-C₁-C₆-haloalkyl or represents phenyl, phenoxy, 5-or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of halogen, C₁-C₆-alkyl and C₁-C₆-haloalkyl,
Y furthermore represents phenyl, phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of C₁-C₆-alkoxy, C₁-C₆-haloalkoxy, C₁-C₆-alkylthio and C₁-C₆-haloalkylthio,
n represents 1, 2 or 3,
m represents 1, 2, 3 or 4,
R¹, R², R³ and R⁴ independently of one another represent hydrogen, C₁-C₆-alkyl, C₁-C₆-haloalkyl or C₃-C₆-cycloalkyl,
R⁵, R⁶ and R⁷ independently of one another represent C₁-C₆-alkyl or C₁-C₆-alkoxy,
A represents -S(O)_{d}- or oxygen,
a represents 1, 2, 3 or 4, with the proviso that the repeat unit -CR¹R²- may have identical or different meanings if a represents 2, 3 or 4,
b represents 0 or 1,
c represents 0, 1, 2, 3 or 4, with the proviso that the repeat unit -CR³R⁴- may have identical or different meanings if c represents 2, 3 or 4,
d represents 0, 1 or 2.

2. Phthalamides of the formula (I) according to Claim 1, in which
X represents hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S(O)_{d}-C₁-C₆-alkyl, -S(O)_{d}-C₁-C₆-haloalkyl or represents phenyl or phenoxy, each of which is optionally mono- to tetrasubstituted by identical or different substituents from the group consisting of halogen, C₁-C₆-alkyl and C₁-C₆-haloalkyl,
Y represents hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S(O)_{d}-C₁-C₆-alkyl, -S(O)_{d}-C₁-C₆-haloalkyl or represents phenyl, phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of halogen, C₁-C₆-alkyl and C₁-C₆-haloalkyl,
n, m, R¹, R², R³, R⁴, R⁵, R⁶, R⁷, A, a, b, c and d are as defined in Claim 1.

3. Phthalamides of the formula (I) according to Claim 1, in which
X represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms,
Y represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms,
Y furthermore represents phenyl phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of fluorine, chlorine, bromine, iodine, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₁-C₄-alkylthio, C₁-C₄-haloalkylthio having 1 to 9 fluorine, chlorine and/or bromine atoms,
n represents 1 or 2,
m represents 1, 2 or 3,
R¹, R², R³ and R⁴ independently of one another represent hydrogen, C₁-C₄-alkyl, C₁-C₄-haloalkyl having 1 to 9 fluorine, chlorine and/or bromine atoms or C₃-C₆-cycloalkyl,
R⁵, R⁶ and R⁷ independently of one another represent C₁-C₃-alkyl or C₁-C₃-alkoxy,
A represents -S(O)_{d}- or oxygen,
a represents 1, 2 or 3, with the proviso that the repeat unit -CR¹R²- may have identical or different meanings if a represents 2 or 3,
b represents 0 or 1,
c represents 0, 1, 2 or 3, with the proviso 3 4 that the repeat unit -CR R - may have identical or different meanings if c represents 2 or 3,
d represents 0, 1 or 2.

4. Phthalamides of the formula (I) according to Claim 3, in which
X represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms,
Y represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms, and
n, m, R¹, R², R³, R⁴, R⁵, R⁶, R⁷, A, a, b, c and d are as defined in Claim 3.

5. Phthalamides of the formula (I) according to Claim 1, in which
X represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms,
Y represents hydrogen, fluorine, chlorine, bromine, iodine, cyano, nitro, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₃-C₆-cycloalkyl, -S(O)_{d}-C₁-C₄-alkyl, -S(O)_{d}-C₁-C₄-haloalkyl having 1 to 9 fluorine, chlorine and/or bromine atoms,
Y furthermore represents phenyl, phenoxy, furyl, furyloxy, thienyl, thienyloxy, pyrrolyl, pyrrolyloxy, tetrazolyl, pyridyl, pyridyloxy, pyrimidinyl, pyrimidinyloxy, pyridazinyl, pyridazinyloxy, pyrazinyl or pyrazinyloxy, each of which is optionally mono- to tetrasubstituted by identical or different substituents from the group consisting of fluorine, chlorine, bromine, iodine, C₁-C₄-alkyl, C₁-C₄-haloalkyl having 1 to 9 fluorine, chlorine and/or bromine atoms, C₁-C₄-alkoxy, C₁-C₄-haloalkoxy having 1 to 9 fluorine, chlorine and/or bromine atoms, C₁-C₄-alkylthio, C₁-C₄-haloalkylthio having 1 to 9 fluorine, chlorine and/or bromine atoms,
n represents 1 or 2,
m represents 1, 2 or 3,
R¹, R², R³ and R⁴ independently of one another represent hydrogen, C₁-C₄-alkyl, C₁-C₄-haloalkyl having 1 to 9 fluorine, chlorine and/or bromine atoms or C₃-C₆-cycloalkyl,
R⁵, R⁶ and R⁷ independently of one another represent C₁-C₃-alkyl or C₁-C₃-alkoxy,
A represents -S(O)_{d}- or oxygen,
a represents 1, 2 or 3, with the proviso that the repeat unit -CR¹R²- may have identical or different meanings if a represents 2 or 3,
b represents 0 or 1,
c represents 0, 1, 2 or 3, with the proviso that the repeat unit -CR³R⁴- may have identical or different meanings if c represents 2 or 3,
d represents 0, 1 or 2.

6. Phthalamides of the formula (I) according to Claim 1, in which
X represents chlorine, bromine, iodine,
Y represents methyl, ethyl, n-propyl, isopropyl, trifluoromethyl, pentafluoroethyl, n-heptafluoropropyl, isoheptafluoropropyl, trifluoromethoxy or -OCF₂CF₂H,
Y furthermore represents phenoxy, pyridinyloxy or tetrazolyl, each of which is mono- to trisubstituted by identical or different substituents from the group consisting of fluorine, chlorine, bromine, iodine, methyl, ethyl, n-propyl, isopropyl, n-butyl, isobutyl, sec-butyl, tert-butyl, -CF₃, -CHF₂, -CClF₂, -CF₂CHFCl, -CF₂CH₂F, -CF₂CCl₃, -CH₂CF₃, -CF₂CHFCF₃, -CH₂CF₂H, -CH₂CF₂CF₃, -CF₂CF₂H, -CF₂CHFCF₃, -OCF₃, -OCHF₂, -OCF₂CF₂H, -SCF₃, -SCHF₂,
n represents 1,
m represents 2,
R¹, R², R³ and R⁴ independently of one another represent hydrogen, methyl or ethyl,
R⁵, R⁶ and R⁷ independently of one another represent methyl, ethyl, methoxy or ethoxy,
A represents -S(O)_{d}- or oxygen,
a represents 1, 2 or 3, with the proviso that the repeat unit -CR¹R²- may have identical or different meanings if a represents 2 or 3,
b represents 0 or 1,
c represents 0, 1 or 2, with the proviso that the repeat unit -CR³R⁴- may have identical or different meanings if c represents 2,
d represents 0, 1 or 2.

7. Phthalamides of the formula (I) according to Claim 6, in which
Y represents methyl, ethyl, n-propyl, isopropyl, trifluoromethyl, pentafluoroethyl, n-heptafluoropropyl, isoheptafluoropropyl, trifluoromethoxy or -OCF₂CF₂H , and
X, n, m, R¹, R², R³, R⁴, R⁵, R⁶, R⁷, A, a, b, c and d have the meanings given in Claim 6.

8. Phthalamides of the formula (I-a) 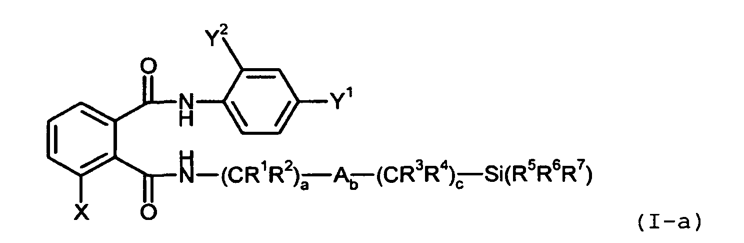 in which
Y¹ and Y² independently of one another represent hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S(O)_{d}-C₁-C₆-alkyl, -S(O)_{d}-C₁-C₆-haloalkyl or represent phenyl, phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of halogen, C₁-C₆-alkyl and C₁-C₆-haloalkyl,
Y¹ and Y² furthermore independently of one another represent phenyl, phenoxy, 5- or 6-membered heteroaryl or heteroaryloxy having 1 to 4 heteroatoms including 0 to 4 nitrogen atoms, 0 to 2 non-adjacent oxygen and/or 0 to 2 non-adjacent sulphur atoms, which radicals are in each case optionally mono- to tetrasubstituted by identical or different substituents from the group consisting of C₁-C₆-alkoxy, C₁-C₆-haloalkoxy, C₁-C₆-alkylthio and C₁-C₆-haloalkylthio,
A represents sulphur or oxygen,
b represents 0 or 1,
X, R¹, R², R³, R⁴, R⁵, R⁶, R⁷, a and c have the meanings given in one of Claims 1 to 7.

9. Phthalamides of the formula (I-b) 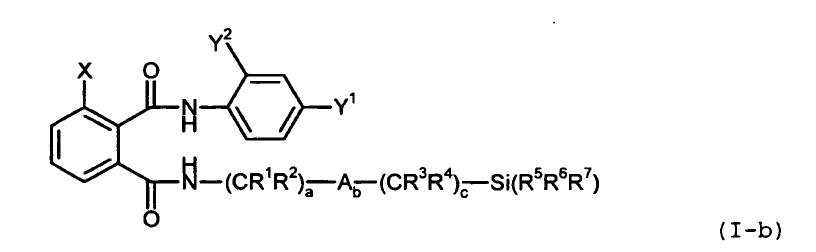 in which
Y¹ and Y² independently of one another represent hydrogen, halogen, cyano, nitro, C₁-C₆-alkyl, C₁-C₆-haloalkyl, C₁-C₆-alkoxy, C₁-C₆-haloalkoxy, C₃-C₆-cycloalkyl, C₃-C₆-halocycloalkyl, C₃-C₆-cycloalkyloxy, C₃-C₆-halocycloalkyloxy, -S(O)_{d}-C₁-C₆-alkyl, -S(O)_{d}-C₁-C₆-haloalkyl or represent phenyl, phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of halogen, C₁-C₆-alkyl and C₁-C₆-haloalkyl,
Y¹ and Y² furthermore independently of one another represent phenyl, phenoxy, 5- or 6-membered heteroaryl or heteroaryloxy having 1 to 4 heteroatoms including 0 to 4 nitrogen atoms, 0 to 2 non-adjacent oxygen atoms and/or 0 to 2 non-adjacent sulphur atoms, which radicals are in each case optionally mono- to tetrasubstituted by identical or different substituents from the group consisting of C₁-C₆-alkoxy, C₁-C₆-haloalkoxy, C₁-C₆-alkylthio and C₁-C₆-haloalkylthio,
A represents sulphur or oxygen,
b represents 0 or 1 and
X, R¹, R², R³, R⁴, R⁵, R⁶, R⁷, a and c have the meanings given in one of Claims 1 to 7.

10. Phthalamides of the formula (I) according to Claim 8, in which A represents SO or SO₂.

11. Phthalamides of the formula (I) according to Claim 9, in which A represents SO or SO₂.

12. Phthalamides of the formula (I) according to Claim 8, in which Y¹ represents trifluoromethyl, pentafluoroethyl, n-heptafluoropropyl or isoheptafluoropropyl.

13. Phthalamides of the formula (I) according to Claim 9, in which Y¹ represents trifluoromethyl, pentafluoroethyl, n-heptafluoropropyl or isoheptafluoropropyl.

14. Phthalamides of the formula (I) according to Claim 8, in which Y² represents methyl.

15. Phthalamides of the formula (I) according to Claim 9, in which Y ² represents methyl.

16. Phthalamides of the formula (I) according to any of Claims 1 to 7, in which R⁵, R⁶ and R⁷ each represent methyl.

17. Phthalamides of the formula (I) according to any of Claims 1 to 7, in which A represents S, SO or SO₂.

18. Phthalamides of the formula (I) according to Claim 1, selected from the group consisting of
3-chloro-N²-{2-methyl-4-[1,2,2,2-tetrafluoro-1-(trifluoromethyl)ethyl]phenyl}-N¹-(1-methyl-2-{[(trimethylsilyl)methyl]sulphanyl}ethyl)-phthalamide,
3-chloro-N¹-(2-methyl-4-[1,2,2,2-tetrafluoro-1-(trifluoromethyl)ethyl]phenyl)-N²-(1-methyl-2-{[(trimethylsilyl)methyl]sulphanyl)ethyl)-phthalamide,
3-chloro-N¹-[2-methyl-4-(1,1,2,2-tetrafluoroethoxy)phenyl]-N²-[(trimethylsilyl)-methyl]phthalamide,
3-chloro-N²-[2-methyl-4-(1,1,2,2-tetrafluoroethoxy)phenyl]-N¹-[(trimethylsilyl)-methyl]phthalamide,
3-chloro-N¹-{2-methyl-4-[1,2,2,2-tetrafluoro-1-(trifluoromethyl)ethyl]phenyl}-N²-{2-methyl-2-[(trimethylsilyl)oxy]propyl}phthalamide,
3-chloro-N²-{2-methyl-4-[1,2,2,2-tetrafluoro-1-(trifluoromethyl)ethyl]phenyl}-N¹-{2-methyl-2-[(trimethylsilyl)oxy]propyl}phthalamide.

19. Process for preparing compounds of the formula (I) according to Claim 1, **characterized in that**
imides of the formula (II) 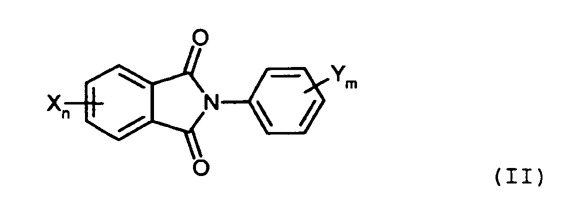 in which
X, Y, n and m have the meanings given in Claim 1
are reacted with silylamines of the formula (III) 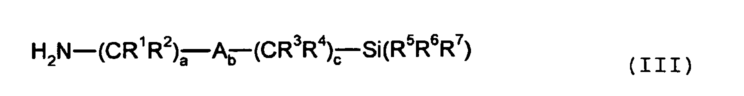 in which
R¹, R², R³, R⁴, R⁵, R⁶, R⁷, A, a, b and c have the meanings given in Claim 1,
if appropriate in the presence of a diluent.

20. Pesticides, **characterized in that** they comprise at least one compound of the formula (I) according to Claim 1, in addition to extenders and/or surfactants.

21. Use of compounds of the formula (I) according to Claim 1 for controlling pests.

22. Method for controlling pests, **characterized in that** compounds of the formula (I) according to Claim 1 are allowed to act on pests and/or their habitat.

23. Process for preparing pesticides, **characterized in that** compounds of the formula (I) according to Claim 1 are mixed with extenders and/or surfactants.

## Revendications

1. Diamides d'acide phtalique de formule (I) 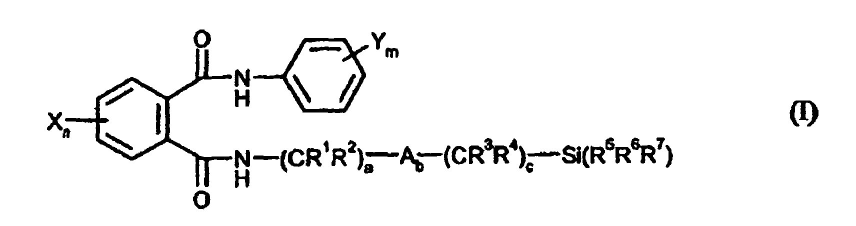 dans laquelle
X représente l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou un reste phényle ou phénoxy, chacun éventuellement substitué une à quatre fois identiques ou différentes par un radical halogéno, alkyle en C₁ à C₆, halogénalkyle en C₁ à C₆,
X représente en outre un reste phényle ou phénoxy, chacun éventuellement substitué une à quatre fois identiques ou différentes par un radical alkoxy en C₁ à C₆, halogénalkoxy en C₁ à C₆, alkylthio en C₁ à C₆, halogénalkylthio en C₁ à C₆,
Y représente l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou bien un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical halogéno, alkyle en C₁ à C₆, halogénalkyle en C₁ à C₆,
Y représente en outre un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical alkoxy en C₁ à C₆, halogénalkoxy en C₁ à C₆, alkylthio en C₁ à C₆, halogénalkylthio en C₁ à C₆,
n a la valeur 1, 2 ou 3,
m a la valeur 1, 2, 3 ou 4,
R¹, R², R³ et R⁴ représentent, indépendamment les uns des autres, l'hydrogène, un reste alkyle en C₁ à C₆, halogénalkyle en C₁ à C₆ ou cycloalkyle en C₃ à C₆,
R⁵, R⁶ et R⁷ représentent indépendamment les uns des autres un reste alkyle en C₁ à C₆ ou alkoxy en C₁ à C₆,
A représente le groupe -S(O)_{d}- ou l'oxygène,
a a la valeur 1, 2, 3 ou 4, sous réserve que la maille -CR¹R²-puisse avoir les mêmes définitions ou des définitions différentes lorsque a a la valeur 2, 3 ou 4,
b a la valeur 0 ou 1,
c a la valeur 1, 2, 3 ou 4, sous réserve que la maille -CR³R⁴-puisse avoir les mêmes définitions ou des définitions différentes lorsque c a la valeur 2, 3 ou 4,
d a la valeur 0, 1 ou 2.

2. Diamides d'acide phtalique de formule (I) suivant la revendication 1, formule dans laquelle
X représente l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou un reste phényle ou phénoxy, chacun éventuellement substitué une à quatre fois identiques ou différentes par un radical halogéno, alkyle en C₁ à C₆, halogénalkyle en C₁ à C₆,
Y représente l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou bien un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical halogéno, alkyle en C₁ à C₆, halogénalkyle en C₁ à C₆,
n, m, R¹, R², R³, R⁴, R⁵, R⁶, R⁷, A, a, b, c, et d ont les définitions indiquées dans la revendication 2.

3. Diamides d'acide phtalique de formule (I) suivant la revendication 1, formule dans laquelle
X représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome,
Y représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome,
Y représente en outre un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical fluoro, chloro, bromo, iodo, alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, alkylthio en C₁ à C₄, halogénalkylthio en C₁ à C₄ avec 1 à 9 atomes de fluor, de chlore et/ou de brome,
n a la valeur 1 ou 2,
m a la valeur 1, 2 ou 3,
R¹, R², R³ et R⁴ représentent, indépendamment les uns des autres, l'hydrogène, un reste alkyle en C₁ à C₄, halogénalkyle en C₁ à C₄ avec 1 à 9 atomes de fluor, de chlore et/ou de brome ou cycloalkyle en C₃ à C₆,
R⁵, R⁶ et R⁷ représentent indépendamment les uns des autres un reste alkyle en C₁ à C₃ ou alkoxy en C₁ à C₃,
A est un groupe -S(O)_{d}- ou l'oxygène,
a a la valeur 1, 2 ou 3, sous réserve que la maille -CR¹R²-puisse avoir des définitions identiques ou différentes lorsque a a la valeur 2 ou 3,
b a la valeur 0 ou 1,
c a la valeur 0, 1, 2 ou 3, sous réserve que la maille -CR³R⁴-puisse avoir des définitions identiques ou différentes lorsque c a la valeur 2 ou 3,
d a la valeur 0, 1 ou 2.

4. Diamides d'acide phtalique de formule (I) suivant la revendication 3, formule dans laquelle
X représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome,
Y représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome, et
n, m, R¹, R², R³, R⁴, R⁵, R⁶, R⁷, A, a, b, c, et d ont les définitions indiquées dans la revendication 3.

5. Diamides d'acide phtalique de formule (I) suivant la revendication 1, formule dans laquelle
X représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome,
Y représente l'hydrogène, le fluor, le chlore, le brome, l'iode, un groupe cyano, nitro, un reste alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, cycloalkyle en C₃ à C₆, -S(O)_{d}-alkyle en C₁ à C₄, -S-(O)_{d}-halogénalkyle en C₁ à C₄ avec 1 à 9 atomes de fluor, de chlore et/ou de brome,
Y représente en outre un reste phényle, phénoxy, furyle, furyloxy, thiényle, thiényloxy, pyrrolyle, pyrrolyloxy, tétrazolyle, pyridyle, pyridyloxy, pyrimidinyle, pyrimidinyloxy, pyridazinyle, pyridazinyloxy, pyrazinyle ou pyrazinyloxy, chacun éventuellement substitué une à quatre fois identiques ou différentes par un radical fluoro, chloro, bromo, iodo, alkyle en C₁ à C₄, halogénalkyle en C₁ à C₄ avec 1 à 9 atomes de fluor, de chlore et/ou de brome, alkoxy en C₁ à C₄, halogénalkoxy en C₁ à C₄ avec 1 à 9 atomes de fluor, de chlore et/ou de brome, alkylthio en C₁ à C₄, halogénalkylthio en C₁ à C₄ avec 1 à 9 atomes de fluor, de chlore et/ou de brome,
n a la valeur 1 ou 2,
m a la valeur 1, 2 ou 3,
R¹, R², R³ et R⁴ représentent, indépendamment les uns des autres, l'hydrogène, un reste alkyle en C₁ à C₄, halogénalkyle en C₁ à C₄ avec 1 à 9 atomes de fluor, de chlore et/ou de brome, ou cycloalkyle en C₃ à C₆,
R⁵, R⁶ et R⁷ représentent indépendamment les uns des autres un reste alkyle en C₁ à C₃ ou alkoxy en C₁ à C₃,
A est un groupe -S(O)_{d}- ou l'oxygène,
a a la valeur 1, 2 ou 3, sous réserve que la maille -CR¹R²-puisse avoir des définitions identiques ou différentes lorsque a a la valeur 2 ou 3,
b a la valeur 0 ou 1,
c a la valeur 0, 1, 2 ou 3, sous réserve que la maille -CR³R⁴-puisse avoir des valeurs identiques ou différentes lorsque c a la valeur 2 ou 3,
d a la valeur 0, 1 ou 2.

6. Diamides d'acide phtalique de formule (I) suivant la revendication 1, formule dans laquelle
X représente le chlore, le brome ou l'iode,
Y est un reste méthyle, éthyle, n-propyle, isopropyle, trifluorométhyle, pentafluoréthyle, n-heptafluoropropyle, isoheptafluoropropyle, trifluorométhoxy ou -OCF₂CF₂H,
Y représente en outre un reste phénoxy, pyridinyloxy ou trétrazolyle, chacun éventuellement substitué une à trois fois identiques ou différentes par un radical fluoro, chloro, bromo, iodo, méthyle, éthyle, n-propyle, isopropyle, n-butyle, isobutyle, sec.-butyle, tertiobutyle, -CF₃, -CHF₂, -CClF₂, -CF₂CHFCl, -CF₂CH₂F, -CF₂CCl₃, -CH₂CF₃, -CF₂CHFCF₃, -CH₂CF₂H, -CH₂CF₂CF₃, -CF₂CF₂H, -CF₂CHFCF₃, -OCF₃, -OCHF₂, -OCF₂CF₂H, -SCF₃, -SCHF₂,
n est égal à 1,
m est égal à 2,
R¹, R², R³ et R⁴ représentent, indépendamment les uns des autres, l'hydrogène, un reste méthyle ou éthyle,
R⁵, R⁶ et R⁷ représentent indépendamment les uns des autres un groupe méthyle, éthyle, méthoxy ou éthoxy,
A est un groupe -S-(O)_{d}- ou l'oxygène,
a a la valeur 1, 2 ou 3, sous réserve que la maille -CR¹R²-puisse avoir des définitions identiques ou différentes lorsque a a la valeur 2 ou 3,
b a la valeur 0 ou 1,
c a la valeur 0, 1 ou 2, sous réserve que la maille -CR³R⁴-puisse avoir des définitions identiques ou différentes lorsque c est égal à 2,
d a la valeur 0, 1 ou 2.

7. Diamides d'acide phtalique de formule (I) suivant la revendication 6, formule dans laquelle
Y est un reste méthyle, éthyle, n-propyle, isopropyle, trifluorométhyle, pentafluoréthyle, n-heptafluoropropyle, isoheptafluoropropyle, trifluorométhoxy ou -OCF₂CF₂H, et
X, n, m, R¹, R², R³, R⁴, R⁵, R⁶, R⁷, A, a, b, c et d ont les définitions indiquées dans la revendication 6.

8. Diamides d'acide phtalique de formule (I-a) 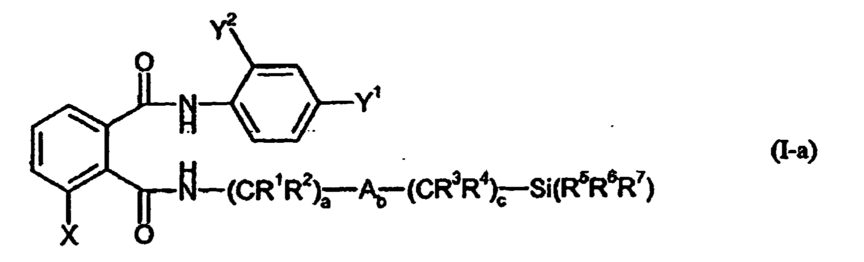 dans laquelle
Y¹ et Y² représentent, indépendamment l'un de l'autre, l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou un reste phényle, phénoxy, hétéroaryle ou hétéroaryloxy pentagonal ou hexagonal avec 1 à 4 hétéroatomes comprenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical halogéno, alkyle en C₁ à C₆, halogénalkyle en C₁ à C₆,
Y¹ et Y² représentent en outre, indépendamment l'un de l'autre, un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical alkoxy en C₁ à C₆, halogénalkoxy en C₁ à C₆, alkylthio en C₁ à C₆, halogénalkylthio en C₁ à C₆,
A représente le soufre ou l'oxygène,
b a la valeur 0 ou 1,
X, R¹, R², R³, R⁴, R⁵, R⁶, R⁷, a et c ont les définitions indiquées dans l'une des revendications 1 à 7.

9. Diamides d'acide phtalique de formule (I-b) 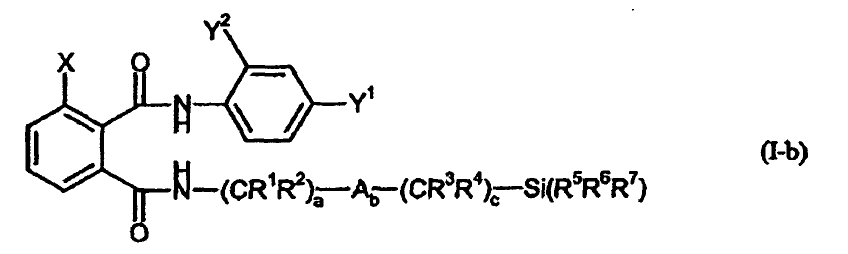 dans laquelle
Y¹ et Y² représentent, indépendamment l'un de l'autre, l'hydrogène, un halogène, un groupe cyano, nitro, un reste alkyle en C₁ à C₆, halogénalkyle en C₁ à C₆, alkoxy en C₁ à C₆, halogénalkoxy en C₁ à C₆, cycloalkyle en C₃ à C₆, halogénocycloalkyle en C₃ à C₆, cycloalkyloxy en C₃ à C₆, halogénocycloalkyloxy en C₃ à C₆, -S(O)_{d}-alkyle en C₁ à C₆, -S(O)_{d}-halogénalkyle en C₁ à C₆ ou un reste phényle, phénoxy, hétéroaryle ou hétéroaryloxy pentagonal ou hexagonal avec 1 à 4 hétéroatomes comprenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical halogéno, alkyle en C₁ à C₆, halogénalkyle en C₁ à C₆,
Y¹ et Y² représentent en outre, indépendamment l'un de l'autre, un reste phényle, phénoxy, hétéroaryle ou hétéroaryloxy pentagonal ou hexagonal avec 1 à 4 hétéroatomes, contenant 0 à 4 atomes d'azote, 0 à 2 atomes d'oxygène non contigus et/ou 0 à 2 atomes de soufre non contigus, chacun éventuellement substitué une à quatre fois identiques ou différentes par un radical alkoxy en C₁ à C₆, halogénalkoxy en C₁ à C₆, alkylthio en C₁ à C₆, halogénalkylthio en C₁ à C₆,
A représente le soufre ou l'oxygène,
b a la valeur 0 ou 1,
X, R¹, R², R³, R⁴, R⁵, R⁶, R⁷, a et c ont les définitions indiquées dans l'une des revendications 1 à 7.

10. Diamides d'acide phtalique de formule (I) suivant la revendication 8, formule dans laquelle A représente SO ou SO₂.

11. Diamides d'acide phtalique de formule (I) suivant la revendication 9, formule dans laquelle A représente SO ou SO₂.

12. Diamides d'acide phtalique de formule (I) suivant la revendication 8, formule dans laquelle Y¹ représente un reste trifluorométhyle, pentafluoréthyle, n-heptafluoropropyle ou isoheptafluoropropyle.

13. Diamides d'acide phtalique de formule (I) suivant la revendication 9, formule dans laquelle Y¹ représente un reste trifluorométhyle, pentafluoréthyle, n-heptafluoropropyle ou isoheptafluoropropyle.

14. Diamides d'acide phtalique de formule (I) suivant la revendication 8, formule dans laquelle Y² est un reste méthyle.

15. Diamides d'acide phtalique de formule (I) suivant la revendication 9, formule dans laquelle Y² est un reste méthyle.

16. Diamides d'acide phtalique de formule (I) suivant l'une des revendications 1 à 7, formule dans laquelle R⁵, R⁶ et R⁷ représentent chacun un reste méthyle.

17. Diamides d'acide phtalique de formule (I) suivant l'une des revendications 1 à 7, formule dans laquelle A représente S, SO ou SO₂.

18. Diamides d'acide phtalique de formule (I) suivant la revendication 1, choisis dans la série
3-chloro-N²-{2-méthyl-4-[1,2,2,2-tétrafluoro-1-(trifluorométhyl)éthyl]phényl)-N¹-(1-méthyl-2-{[(triméthylsilyl)méthyl]sulfanyl}éthyl)phtalamide,
3-chloro-N¹-{2-méthyl-4-[1,2,2,2-tétrafluoro-1-(trifluorométhyl)éthyl]phényl}-N²-(1-méthyl-2-{[(triméthylsilyl)méthyl]-sulfanyl}éthyl)phtalamide,
3-chloro-N¹-{2-méthyl-4-[1,1,2,2-tétrafluoréthoxy)phényl]-N²-[(triméthylsilyl)méthyl]phtalamide,
3-chloro-N²-{2-méthyl-4-[1,1,2,2-tétrafluoréthoxy)phényl]-N¹-[(triméthylsilyl)méthyl]phtalamide,
3-chloro-N¹-(2-méthyl-4-[1,2,2,2-tétrafluoro-1-(trifluorométhyl)éthyl]phényl}-N²-{2-méthyl-2-[(triméthylsilyl)oxy]-propyl)phtalamide,
3-chloro-N²-{2-méthyl-4-[1,2,2,2-tétrafluoro-1-(trifluorométhyl)éthyl]phényl}-N¹-{2-méthyl-2-[(triméthylsilyl)oxy]-propyl}phtalamide.

19. Procédé de production de composés de formule (I) suivant la revendication 1, **caractérisé en ce qu'**on fait réagir des imides de formule (II) 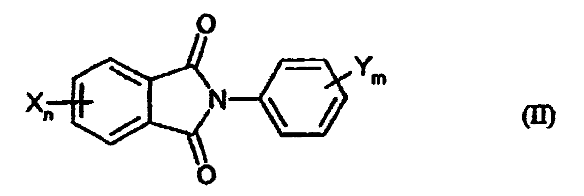 dans laquelle X, Y, n et m ont les définitions indiquées dans la revendication 1,
avec des silylamines de formule (III) 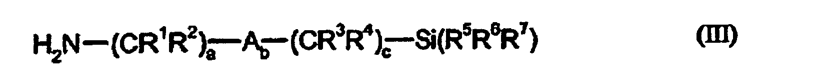 dans laquelle
R¹, R², R³, R⁴, R⁵, R⁶, R⁷, A, a, b et c ont les définitions indiquées dans la revendication 1.
éventuellement en présence d'un diluant.

20. Compositions pesticides, **caractérisées par** une teneur en au moins un composé de formule (I) suivant la revendication 1, à côté de diluants et/ou d'agents tensioactifs.

21. Utilisation de composés de formule (I) suivant la revendication 1 pour combattre des parasites.

22. Procédé de lutte contre des parasites, **caractérisé en ce qu'**on fait agir des composés de formule (I) suivant la revendication 1 sur des parasites et/ou sur leur milieu.

23. Procédé de préparation de compositions pesticides, **caractérisé en ce qu'**on mélange des composés de formule (I) suivant la revendication 1 avec des diluants et/ou des agents tensioactifs.
